# EUROPÄISCHE PATENTANMELDUNG

(11) **EP 1 992 478 A1**
(43) Veröffentlichungstag der Anmeldung: **19.11.2008**
(21) Anmeldenummer: 07108444.6
(22) Anmeldetag: 18.05.2007
(51) Int. Cl.: B32B 17/10, C03C 27/12, H05B 33/12, C08K 3/04, C08L 29/14, F21V 9/16

(54) **Verbundglaselement, bevorzugt Verbundsicherheitsglaselement, mit integrierter Elektrolumineszenz (EL)-Leuchtstruktur**

(71) Anmelder: LYTTRON Technology GmbH, 51021 Köln (DE)
(72) Erfinder: Werners Thilo-J., 51375 Leverkusen (DE); Heite Michael Dr., 57462 Olpe (DE)
(74) Vertreter: Gille Hrabal Struck Neidlein Prop Roos

(57) **Zusammenfassung**

Beschrieben wird ein Verbundglaselement, bevorzugt Verbundsicherheitsgfaselement, mit integrierter Elektrolumineszenz (EL)-Leuchtstruktur, ein Verfahren zur Herstellung eines erfindungsgemäßen Verbundglaselements, ein Isoiierglaselement enthaltend mindestens ein erfindungsgemäßes Verbundglaselement und die Verwendung eines erfindungsgemäßen Verbundglaselements als Dekorelement und/oder Leuchtelement in Innenräumen oder zur Außenanwendung, bevorzugt an Außenfassaden von Gebäuden, in oder an Einrichtungsgegenständen, in oder an Land-, Luft- oder Wasserfahrzeugen oder in der Werbebranche.

## Beschreibung

Die vorliegende Erfindung betrifft ein Verbundglaselement, bevorzugt Verbundsicherheitsglaselement, mit integrierter Elektrolumineszenz (EL)-Leuchtstruktur, ein Verfahren zur Herstellung eines erfindungsgemäßen Verbundglaselements, ein Isolierglaselement enthaltend mindestens ein erfindungsgenmäßes Verbundglaselement und die Verwendung eines erfindungsgemäßen Verbundglaselements als Dekorelement und/oder Leuchtelement in Innenräumen oder zur Außenanwendung, bevorzugt an Außenfassaden von Gebäuden, in oder an Einrichtungsgegenstönden, in oder an Land-, Luft- oder Wasserfahrzeugen oder in der Werbebranche.

Transparente EL-Anordnungen, z.B. EL-Leuchtplatten auf der Basis von Glas oder transparentem Kunststoff, die z.B. als Informationsträger, Werbetransparente oder zu dekorativen Zwecken dienen können, sind im Stand der Technik bekannt.

So betrifft DE 296 17 328 U1 eine EL-Leuchtplatte, die in einem hermetisch verschlossenen Innenraum eines Isolierglaselements angeordnet ist. Dadurch wird elektrische Sicherheit und Schutz vor Feuchtigkeit, sowie - je nach Bauart - Schutz gegen elektromagnetische Wellen erzielt.

EP 0 267 331 A1 betrifft eine Verbundscheibe mit einem in die Verbund-Klebeschicht eingebetteten Zeichen, das durch ein EL-Element dargestellt oder hinterleuchtbar ist. Die elektrischen Zuleitungen sind nahezu unsichtbar durch dünne, transparente metallische oder oxidische Leiterbahnen oder Schichten innerhalb des Verbundes dargestellt. Nach Einschalten der Spannung scheint das Leuchtzeichen ohne sichtbare Zuleitungen in der Scheibe zu schweben. Das EL-Element ist in einer in EP 0 267 331 A1 genannten Ausführungsform in der Form ausgeführt, dass auf beiden Innenflächen der Verbundscheibe jeweils eine der beiden Elektroden als transparente Dünnschicht aufgebracht ist und dazwischen das Leuchtelement nebst der dielektrischen Trennschicht angeordnet ist. Die transparenten Elektroden des EL-Elemets sind bevorzugt aus Indium-Zinn-Oxis (ITO) aufgebaut und die Licht-emittierende Schicht wird unmittelbar auf diese Elektrode aufgebracht.

In US 7,009,156 B2 ist eine beheizbare Verbundscheibe offenbart, die ein elektrisch kontrollierbares flaches funktionelles Element, z.B. ein EL-Element, und mindestens einen elektrisch leitenden dünnen Film, der eine flache Elektrode des flachen funktionellen Elements bildet, aufweist. Durch die Beheizbarkeit der Verbundscheibe können gemäß US 7,009,156 B2 unerwünschte Abweichungen der optischen Eigenschaften des flachen funktionellen Elements, z.B. des EL-Elements, vermieden werden. Das EL-Element ist mit integrierter Gegenelektrode kompakt ausgeführt und weist somit keine elektrisch leitende und transparente Beschichtung eines zweiten Glaselementes auf.

In DE 102 551 99A1 ist ein Verfahren zur Herstellung eines EL-Leuchtelements offenbart, wobei auf ein Substrat zur Bildung einer transparente Flächenelektrode ein Dünnschichtsystem aufgebracht wird und darauf mittels Siebdruck nacheinander eine EL-Leuchtschicht und zumindest eine zweite Flächenelektrode. Das EL-Element wird somit auf einer transparenten Dünnschicht-Elektrode aufgebaut, die bereits mindestens einen Teil der dielektrischen Trennschicht des EL-Elements umfasst. Zwischen der eigentlichen elektrisch leitfähigen Elektrodenschicht und der EL-Leuchtschicht ist mindestens eine dielektrische (Teil-)Schicht angeordnet.

WO 2005/104625 A1 wird ein Beleuchtungsschichtsystem offenbart mit einer ersten Elektrode auf einem Glassubstrat und darüber einer zweiten Elektrode, die beide in Form elektrisch leitender Schichten oder Teilschichten ausgebildet sind. Mindestens eine der Elektroden ist im Bereich des sichtbaren Lichtes transparent, und zwischen erster und zweiter Elektrode ist mindestens eine elektrolumineszierende Schicht vorgesehen. Die mindestens eine elektrolumineszierende Schicht ist eine siebgedruckte elektrolumineszierende Schicht, und die zweite Elektrode ist durch eine elektrisch leitfähige siebgedruckte Schicht ausgebildet.

In zahlreichen im Stand der Technik bekannten EL-Elementen werden Wechselspannungs-Dickfilm Elektrolumineszenz-Leuchtstrukturen, insbesondere auf Basis von zinksulfidischen EL-Pigmenten eingesetzt. Die Dickfilm Elektrolumineszenz-Leuchtstrukturen werden gemäß dem Stand der Technik dadurch hergestellt, dass die in den EL-Leuchtstrukturen vorliegende zweite Elektrode auf die EL-Struktur mittels Siebdruck oder sonstiger Drucktechniken oder mittels PVD Verfahren aufgebracht wird, wobei die zweite Elektrode transparent oder opak beziehungsweise undurchsichtig sein kann, Der Grund dafür liegt auf der einen Seite in den relativ großen zur Verfügung stehenden zinksulfidischen EL-Pigmenten mit einem d50-Wert von im Allgemeinen 20 bis 30 µm mit einer entsprechenden Pigmentgrößenverteilung und somit einer relativ dicken EL-Schicht im Bereich von 20 bis 50 µm mit Unebenheiten z,B, aufgrund verschieden großer EL-Pigmente, agglomerierter EL-Pigmente und/oder einer Übereinanderanordnung von zwei oder mehr EL-Pigmenten. Aufgrund dieser relativ unebenen EL-Schicht ist eine gute Isolationsschicht beziehungsweise Dielektrikumsschicht erforderlich. Bei Verwendung von Siebdruckschichten werden diese daher oft doppelt ausgeführt, da speziell im Siebdruckverfahren kleinste Luft- beziehungsweise Gasbläschen, sogenannte "Microbubbles", nicht immer vermieden werden können und die notwendige Wechselspannung von üblicherweise 100 bis 200 Volt bei Frequenzen von der Netzfrequenz von 50 Hz bis 800 Hz und weit darüber eine hohe Anforderung an die Durchschlagsfestigkeit bedeutet.

Durch die Anordnung der zweiten Elektrode unmittelbar auf der Isolationsbeziehungsweise Dielektrikumsschicht und der EL-Schicht ist üblicherweise ein flächig gleichmäßiger Elektrodenabstand gewährleistet und somit eine gleichmäßige EL-Emission gegeben.

Die in Verbundglas, insbesondere Verbundsicherheitsglas (VSG), häufige Verwendung von Floatglas, Einscheiben-Sicherheits-Glas (ESG) oder teilvorgespanntem Glas (TVG) sowie die Verwendung von Verbundglas mit elektrisch leitend beschichteten Oberflächen als gegenüberliegende Elektroden-Substrate bewirkt bei entsprechender Größe der Glassubstrate eine Welligkeit. Jede Unebenheit stellt ein Problem bei der Ausbildung eines gleichmäßigen elektrischen Wechselfeldes dar und bewirkt eine ungleichmäßige EL-Emission.

Verbundglas- insbesondere Verbundsicherheitsglas-Konstruktionen werden aufgrund der Welligkeit beziehungsweise Unebenheit mit relativ dicken polymeren Haftvermittlerschichten von zumindest etwa 0,38 mm Dicke und bei großer Festigkeitsanforderung meist mit zumindest 0,76 mm dicken Schichten ausgeführt. Die Haftvermittlerschichten können z.B. aus Polyvinylbutyral sein.

Eine 0,38 mm dicke Isolationsschicht in einem EL-Kondensatoraufbau würde jedoch extrem hohe Spannungen erforderlich machen, da bereits bei 40 bis 100 µm Elektrodenabstand eine EL-Wechselspannung von im Allgemeinen 100 bis 200 Volt erforderlich ist.

Bei kleinen Glassubstrat-Abmessungen und dünnen Gläsern von nur 1 oder 2 mm Dicke ist das Problem des ungleichmäßigen Elektrodenabstandes nicht so bedeutend wie bei großflächigen Fenster- und Fassadenelementen.

Aufgabe der vorliegenden Erfindung ist die Bereitstellung eines Verbundglaselements, insbesondere eines Verbundsicherheitsglaselements mit einem Lichteffekt auf Basis eines mit Wechselstrom betriebenen Elektrolumineszenzsystems. Durch das Elektrolumineszenzsystem sollen möglichst wenige zusätzliche Schichten in das Verbundglas eingebracht werden, d.h. die in dem Verbundglas vorliegenden Schichten sollen gleichzeitig als Schichten für das Elektrolumineszenzsystem genutzt werden. Dieses Verbundglaselement soll auch bei großen Abmessungen (großflächige Glaselemente) eine gleichmäßige EL-Emission aufweisen und für die Verwendung als Dekorelement und/oder Leuchtelement in Innenräumen und/oder Außenbereichen geeignet sein.

Diese Aufgabe wird gelöst durch ein Verbundglaselement, bevorzugt Verbundsicherheitsglaselement, mit integrierter Elektrolumineszenz-Leuchtstruktur, umfassend:
a) ein erstes zumindest teilweise transparentes Substrat mit einer Innenseite und einer Außenseite, das durch Beschichtung auf der Innenseite elektrisch leitfähig ist und eine erste Elektrode A darstellt,
b) einen zumindest teilweise transparenten polymeren Haftvermittler B aus einem Kunststoff, der bevorzugt eine relative Dielektrizitätskonstante gemessen bei 1 kHz von mindestens 30 aufweist, der auf der Innenseite des ersten zumindest teilweise transparenten Substrats im Anschluss an die Beschichtung angeordnet ist,
c) mindestens eine Elektroluminezenz-Leuchtstruktur C, die an den polymeren Haftvermittler auf der Innenseite des ersten zumindest teilweise transparenten Substrats angeordnet ist, wobei die mindestens eine Elektroluminezenz-Leuchtstruktur auf der gesamten Fläche des ersten zumindest teilweise transparenten Substrats angeordnet sein kann oder auf einer oder mehreren Teilflächen des ersten zumindest teilweise transparenten Substrats angeordnet sein kann,
d) ein zweites zumindest teilweise transparentes Substrat mit einer Innenseite und einer Außenseite, das im Anschluss an die mindestens eine Elektroluminezenz-Leuchtstruktur angeordnet ist, das durch Beschichtung auf der Innenseite elektrisch leitfähig ist, wobei die Innenseite des zweiten zumindest teilweise transparenten Substrats in Richtung der Innenseite des ersten zumindest teilweise transparenten Substrats angeordnet ist, wobei das zweite zumindest teilweise transparente Substrat eine zweite Elektrode D darstellt,

Das Verbundglaselement zeichnet sich aufgrund des durch das Verbundglassystem vorgegebenen planparallelen Basissubstrats durch einen gleichmäßigen Elektrodenabstand und damit durch eine gleichmäßige EL-Emission aus.

In dem erfindungsgemäßen Verbundglaselement werden die in Verbundglaselementen vorhandenen Strukturen genutzt, um mindestens eine EL-Leuchtstruktur zu integrieren, d.h., die in Verbundglaselementen üblicherweise vorhandenen Glasscheiben werden - nach geeigneter Beschichtung - als Elektroden genutzt und der polymere Haftvermittler (klebfähige Zwischenschicht) wird als Isolator genutzt.

Unter dem Ausdruck "zumindest teilweise transparent" ist im Sinne der vorliegenden Anmeldung ein Substrat zu verstehen, das eine Transmission von > 60% aufweist. Unter transparent sind Substrate zu verstehen, die eine Transmission von > 90% aufweisen.

Der Ausdruck "Verbundglas" ist dem Fachmann bekannt. Ein Verbundglas ist im Allgemeinen ein Laminat mit mindestens zwei Glas- oder seltener Kunststoffscheiben, die durch eine durchsichtige klebfähige Zwischenschicht (polymerer Haftvermittler, Verbundmasse) aus Kunststoff, z.B. Gießharz oder einer hoch reißfesten zähelastischen thermoplastischen Verbundfolie, verbunden sind, Übliche thermoplastische Verbundfolien sind z.B. aus Polyvinylbutyral (PVB), Ethylenvinylacetat (EVA), Polyacrylat (PA), Polymethylmethacrylat (PMMA), Polyurethan (PU), Polyvinylalkohol (PVA) oder Polyvinylchlorid (PVC) aufgebaut, wobei in den meisten Fällen Polyvinylbutyral (PVB) eingesetzt wird. Der Lichtbrechungsindex der klebfähigen Zwischenschicht ist im Allgemeinen größer 1 und kleiner 2, bevorzugt im Bereich von 1,5.

"Verbundsicherheitsglas" (VSG) ist eine spezielle Form eines Verbundglases, die gesetzliche Mindestanforderungen erfüllt. Je nach Anforderungsprofil können z.B. die Scheibenzahl, Scheibendicke und Dicke der klebfähigen Zwischenschicht - bei Einsatz einer Verbundfolie die Foliendicke - variiert werden. Als Glas- oder Kunststoffscheiben können z.B. Floatglas, Einscheiben-Sicherheitsglas (ESG) oder teilvorgespanntes Glas eingesetzt werden.

Die Herstellung von Verbundglas und VSG erfolgt im Allgemeinen bei Reinraumbedingungen. In einem Autoklaven werden Glas (oder Kunststoff) und Zwischenschicht (üblicherweise Folie) unter Hitze mit Druck zu einer unlösbaren Einheit verschmolzen.

Die vorstehend betreffend den Aufbau von Verbundglas bzw. VSG genannten Materialien sowie das vorstehend genannte Herstellungsverfahren können grundsätzlich in dem erfindungsgemäßen Verbundglaselement bzw. zu dessen Herstellung ebenfalls eingesetzt werden. Bevorzugte Materialien und Herstellungsverfahren bezüglich des erfindungsgemäßen Verbundglaselements sind nachstehend genannt.

### Erste Elektrode A, zweite Elektrode D

### Zumindest teilweise transparentes Substrat

Als zumindest teilweise transparentes Substrat der Elektroden A und D ist jedes zur Herstellung von Verbundglas, insbesondere zur Herstellung von Verbundsicherheitsglas (VSG), geeignete zumindest teilweise transparente Substrat geeignet. Im Allgemeinen wird als zumindest teilweise transparentes Substrat Glas oder transparenter Kunststoff eingesetzt. Geeignete transparente Kunststoffe sind dem Fachmann bekannt. Beispiele sind Acrylglas und Polycarbonat.

Bevorzugt handelt es sich bei dem zumindest teilweise transparenten Substrat um Glassubstrate, bevorzugt Floatglas, Einscheiben-Sicherheitsglas (ESG) oder teilvorgespanntes Glas (TVG).

Die Glasdicke ist abhängig vom Einsatzzweck und kann in der ersten Elektrode A und der zweiten Elektrode D unterschiedlich sein. Üblich Dicken betragen von im Allgemeinen 1 mm bis 25 mm. Nachstehend sind spezielle Ausführungsformen genannt, worin das erfindungsgemäße Verbundglaselement eingesetzt werden kann.

Beispielsweise werden in modernen Fensterkonstruktionen zwei oder mehr gleich- oder ungleichartige beabstandete Glasscheiben aus Flachglas, auch als Floatglas bezeichnet, mit einer Dicke von im Allgemeinen 1 mm bis 21 mm, bevorzugt 3 mm bis 8 mm eingesetzt. Der Abstand der Glasscheiben beträgt im Allgemeinen 12 mm bis 16 mm.

Die Ausführungsformen können entsprechend den erforderlichen Eigenschaften z.B. für den Wärmeschutz, den Sonnenschutz, den Schallschutz, den Brandschutz, den Personen- und Objektschutz oder Kombinationen davon ausgebildet sein. So kann es bei Außenanwendungen in Gebäudefassaden z.B. sinnvoll sein, zusätzlich zur normalen UV-Filterung von Glassubstraten ab etwa 380 nm eine weitere UV-Schutzschicht F auf der Außenseite der Elektrode A und oder der Elektrode D vorzusehen, wobei bei geeigneter Ausbildung der Elektrodenschicht A oder D auch diese Schicht UV-Filterwirkung aufweist.

Das erfindungsgemäße Verbundglaselement ist insbesondere für den Einsatz in großflächigen Glaselementen (große Abmessungen) geeignet und liefert eine gleichmäßige EL. Übliche Abmessungen liegen in einem Bereich von im Allgemeinen 0,5 m bis 10 m (Höhe und Breite). Diese Abmessungen sind lediglich beispielhaft genannt. Es ist ebenfalls möglich, das erfindungsgemäße Verbundglaselement in Glaselementen mit größeren oder kleineren Abmessungen einzusetzen.

Eine übliche und erfindungsgemäß geeignete Flachglasabmessung beträgt z.B. 6,00 x 3,21 Meter. Daraus werden z.B. die Scheiben für typische Mehrscheiben-Isolierglasaufbauten hergestellt, wobei durch den Randverbund bei Isolierglasaufbauten hermetisch abgeschlossene Zwischenräume hergestellt werden, die üblicherweise durch ein Edelgas befüllt werden, wobei der Gasdruck entsprechend dem barometrischen Luftdruck am Ort und zum Zeitpunkt der Produktion eingestellt wird. Es besteht also zum Zeitpunkt der Produktion ein Gleichgewicht zwischen dem Druck in der Verglasungseinheit und dem äußeren barometrischen Druck in der Produktionsumgebung.

Ein weiterer Gegenstand der vorliegenden Erfindung ist ein Isolierglas-Element, das mindestens ein erfindungsgemäßes Verbundglaselement, bevorzugt VSG-Element, aufweist. Der Aufbau von Isolierglas-Elementen ist dem Fachmann bekannt.

In Ländern mit großen Temperaturunterschieden sind Isoliergloskonstruktionen eine notwendige und übliche Energiesparmaßnahme. Ein möglicher Isolierglasaufbau umfasst z.B. ein erfindungsgemäßes Verbundglaselement und ein weiteres Glaselementes.

Ein Isolierglasverbund kann gemäß dem Stand der Technik aufgebaut sein, z.B. unter Verwendung eines Abstandhalters, z.B. aus einem Aluminium- oder Stahlprofil, und einer so genannten Sekundärdichtung, die das erfindungsgemäße Verbundglaselement beziehungsweise ein weiters Glaselement über den Abstandshalter mit einem dritten Glaselement dauerelastisch verbindet. Durch einen Randverbund wird ein hermetisch abgeschlossener Zwischenraum hergestellt, welcher üblicherweise durch ein Edelgas befüllt werden kann, wobei der Gasdruck entsprechend dem barometrischen Luftdruck am Ort und zum Zeitpunkt der Produktion oder entsprechend dem barometrischen Luftdruck am Ort der Verwendung eingestellt wird. Alternativ kann ein Ventil vorgesehen werden, mit dem der Gasdruck vor Ort optimal eingestellt werden kann.

Die Abstandshalterprofile sind üblicherweise mit Trockenmitteln befüllt, die über Öffnungen mit dem vorstehend erwähnten Zwischenraum verbunden sind und gegebenenfalls eindringenden Wasserdampf binden sollen, so dass die Lebensdauer des Isolierglas-Elements erhöht wird.

Grundsätzlich können die Glaselemente des Isolierglas-Elements aus einfachem Floatglas oder aus einem eisenoxidarmen Weißglas beziehungsweise aus einem ESG oder VSG oder TVG Element gebildet werden. Sämtliche Glasoberflächen können mit diversen wärmeschützenden, lichtabsorbierenden, lichtreflektierenden und/oder kratzfesten und/oder leicht reinigbaren Schichten beziehungsweise mit Schichten mit einer Zusatzfunktion versehen werden.

Das Isolierglas-Element kann auch mit zwei Zwischenräumen, d.h. mit einem dritten Glaselement ausgebildet werden.

Wie vorstehend erwähnt können somit neben Zweifach-, Dreifach- oder auch Mehrfoch-Isollerglasaufbauten aus einfachem Floatglas, derartige Mehrscheiben-Isolierglasaufbauten auch aus Scheiben gebildet werden, die auf einer oder auf beiden Seiten eine Beschichtung aufweisen und so die Reflexion und/oder Transmission in gewünschten Wellenlängenbereichen des Lichtes beeinflussen. Des Weiteren können die einzelnen Scheiben vorgespannt oder durchgefärbt ausgeführt werden oder aber aus so genanntem Einscheiben-Sicherheits-Glas (ESG) oder aus teilvorgespanntem Glas (TVG) gebildet werden.

Für Isolierglassysteme ist des Weiteren der so genannte k-Wert von Bedeutung. Die Wärmeübergangszahl k gibt an, wie viel Energie, angegeben in Watt pro Quadratmeter Glasoberfläche und Grad Temperaturunterschied in Kelvin (W/m²K), verloren geht. Ein kleiner k-Wert bedeutet einen geringeren Energieverlust, Übliche k-Werte von Einscheibengläsern von einigen mm-Dicke betragen 5 bis 6 W/m²K, während moderne Isollerglasaufbauten aus beispielsweise 4 mm Floatglas und 16 mm Argon Gas und 4 mm Floatglas je nach Art der Beschichtung k-Werte im Bereich 1,7 bis 1,1 W/m²K erreichen.

### Elektrisch leitfähige Beschichtung

Erfindungsgemäß werden das erste und das zweite zumindest teilweise transparente Substrat durch Beschichtung auf ihrer jeweiligen Innenseite elektrisch leitfähig gemacht. Dies kann gemäß allen dem Fachmann bekannten Verfahren erfolgen. Geeignete Verfahren sind nachstehend genannt.

Elektrisch leitfähig und weitgehend transparent beschichtete Gläser und Kunststofffolien haben in der Industrie ein weites Anwendungsgebiet erlangt. Die Funktionen derartiger Substrate mit elektrisch leitfähigen transparenten dünnen Schichten reichen von der Deckelektrode bei Flüssigkristallanzeigeelmenten, sogenannten Liquid-Crystall-Displays (LCD's), über Dünnfilm-Transistoren (TFT) Displays, über Deckelektroden für Elektrolumineszenzanzeigen, Computer-Bildschirmelementen bis zu elektrostatischen Abschirmelementen, Heizelementen für Spiegel und Einbruchs-Alarmverglasungen und dergleichen.

Bevorzugt ist die elektrisch leitfähige Beschichtung ein elektrisch leitfähiger zumindest teilweise transparenter, bevorzugt anorganischer, Dünnfilm, der bevorzugt durch Sputtertechnik, Aufdampftechnik, mittels Vakuum oder pyrolytisch auf das erste und das zweite zumindest teilweise transparente Substrat aufgebracht wird. Anschließend kann eine thermische Behandlung, z.B. bei 450 bis 750 °C erfolgen.

Auf thermoplastischen Folien oder Platten können sowohl Niedertemperatur-Sputter- und Aufdampftechniken verwendet werden, als auch Indium-Zinn-Oxid (ITO) oder Zinn-Oxid (NESA) Pasten oder weitere, dem Fachmann bekannte Metalloxide, die in einer entsprechenden Polymermatrix eingebettet sind. Weiterhin können Pasten mit intrinsisch leitfähigen Polymeren eingesetzt werden, beziehungsweise elektrisch leitende Polymerfilme wie Polyaniline, Polythiophene, Polyacetylene, Polypyrrole (Handbook of Conducting Polymers, 1986) mit und ohne Metalloxid-Füllung.

Diese werden z.B. mittels Siebdruck, Rakeln, Spritzen, Streichen auf das Substrat aufgebracht, wobei bevorzugt anschließend bei geringen Temperaturen von beispielsweise 80 bis 120°C getrocknet wird,

In einer bevorzugten Ausführungsform erfolgt die Aufbringung der elektrisch leitfähigen Beschichtung mittels Vakuum oder pyrolytisch,

Besonders bevorzugt ist die elektrisch leitfähige Beschichtung eine mittels Vakuum oder pyrolytisch hergestellte metallische oder metalloxidische dünne und weitgehend transparente Schicht, die bevorzugt einen Flächenwiderstand von 5 Milliohm bis 3.000 Ohm pro Quadrat, besonders bevorzugt einen Flächenwiderstand von 0,1 bis 1.000 Ohm/Quadrat, ganz besonders bevorzugt 5 bis 30 Ohm/Quadrat aufweist, und in einer weiteren bevorzugten Ausführungsform eine Tageslichtdurchlässigkeit von zumindest größer 60 % (> 60 bis 100 %) und insbesondere größer 76 % (> 76 bis 100 %) aufweist.

Eine spezielle bevorzugte Art von elektrisch leitfähigem und hochtransparentem Glas, insbesondere Floatglas stellen pyrolytisch hergestellte Schichten dar, die ein hohe Oberflächenhärte aufweisen und deren elektrischer Oberflächenwiderstand in einem sehr weiten Bereich von im Allgemeinen einigen Milliohm bis 3,000 Ohm pro Quadrat eingestellt werden kann. Die Tageslichtdurchlässigkeit beträgt im Allgemeinen 77 bis 86%. Beispielhaft sei hier das TEC^{®} Glas der Firma Pilkington Libbey-Owens-Ford, Toledo OH, USA genannt.

Ein Glas mit der Bezeichnung TEC^{®} 15/4 weist 4 mm Glasdicke auf und bietet einen Oberflächenwiderstand kleiner 14 Ohm pro Quadrat bei einer Tageslichtdurchlässigkeit von 83%.

Ein Glas mit der Bezeichnung TEC^{®} 70/4 weist ebenfalls 4 mm Glasdicke auf und bietet einen Oberflächenwiderstand kleiner 80 Ohm pro Quadtrat bei einer Tageslichtdurchlässigkeit von 82%.

Derartige pyrolytisch beschichtete Gläser können gut verformt werden und weisen eine gute Kratzbeständigkeit auf, insbesondere führen Kratzer nicht zu einer elektrischen Unterbrechung der elektrisch leitenden Oberflächenschicht, sondern lediglich zu einer meist geringfügigen Erhöhung des Flächenwiderstandes.

Des Weiteren sind pyrolytisch hergestellte leitfähige Oberflächenschichten durch die Temperaturbehandlung derart stark in die Oberfläche diffundiert und in der Oberfläche verankert, dass bei einem anschließenden Materialauftrag ein extrem hoher Haftverbund zum Glassubstrat gegeben ist, was für die vorliegende Erfindung ebenfalls sehr vorteilhaft ist. Zusätzlich weisen derartige Beschichtungen eine gute Homogenität, also eine geringe Streuung des Oberflächenwiderstandswertes über große Oberflächen auf. Diese Eigenschaft stellt ebenfalls einen Vorteil für die vorliegende Erfindung dar,

Elektrisch leitfähige und hochtransparente dünne Schichten können auf einem Glassubstrat, das erfindungsgemäß bevorzugt eingesetzt wird, wesentlich effizienter und kostengünstiger als auf polymeren Substraten wie PET oder PMMA oder PC hergestellt werden. Der elektrische Flächenwiderstand ist bei Glasbeschichtungen im Schnitt um den Faktor 10 günstiger als auf einer polymeren Folie bei vergleichbarer Transparenz, also beispielsweise 3 bis 10 Ohm/Quadrat bei Glasschichten verglichen mit 30 bis 100 Ohm/Quadrat auf PET-Folien. Die Anfertigung der zweiten transparenten Elektrode mittels Vakuumprozess oder Siebdruck auf einem bereits kunden-und applikationsspezifisch ausgebildeten Glassubstrat ist ebenfalls wesentlich aufwändiger und teurer als die Verwendung eines Glassubstrates mit einer leitfähigen Beschichtung gemäß einer bevorzugten Ausführungsform der vorliegenden Erfindung.

### Leiterbahnen, Anschlüsse der Elektroden

Bei großflächigen Leuchtelementen mit einem Leuchtkondensatoraufbau spielt die Flächenleitfähigkeit für eine gleichmäßige Leuchtdichte eine beträchtliche Rolle. Häufig werden bei großflächigen Leuchtelementen, die erfindungsgemäß bevorzugt mit Hilfe des erfindungsgemäßen Verbundglaselements bereitgestellt werden sollen, so genannte Bus-bars eingesetzt, insbesondere bei halbleitenden LEP beziehungsweise OLED Systemen, worin verhältnismäßig große Ströme fließen. Dabei werden in der Art eines Kreuzes sehr gut elektrisch leitfähige Leiterbahnen hergestellt. Auf diese Weise wird beispielsweise eine große Fläche in vier kleine Flächen unterteilt. Damit wird der Spannungsabfall im Mittelbereich einer Leuchtfläche wesentlich reduziert und die Gleichmäßigkeit der Leuchtdichte beziehungsweise der Abfall der Helligkeit in der Mitte eines Leuchtfeldes reduziert.

Bei einem in einer erfindungsgemäßen Ausführungsform eingesetzten zinksulfidischen partikulären EL-Feld werden im Allgemeinen größer 100 Volt bis über 200 Volt Wechselspannung angelegt, und es fließen bei Verwendung eines guten Dielektrikums beziehungsweise guter Isolation sehr geringe Ströme. Daher ist bei einem ZnS-Dickfilm-AC-EL Element, das erfindungsgemäß bevorzugt eingesetzt wird, das Problem der Strombelastung wesentlich geringer als bei halbleitenden LEP beziehungsweise OLED Systemen, so dass der Einsatz von Bus-bars nicht unbedingt erforderlich ist, sondern großflächige Leuchtelemente ohne Einsatz von Bus-bars bereit gestellt werden können.

Die elektrischen Anschlüsse können beispielsweise unter Verwendung von elektrisch leitfähigen und einbrennbaren Pasten mit Zinn, Zink, Silber, Palladium, Aluminium und weiteren geeigneten leitfähigen Metallen beziehungsweise Kombinationen und Mischungen oder Legierungen daraus, hergestellt werden.

Dabei werden die elektrisch leitfähigen Kontaktierstreifen im Allgemeinen mittels Siebdruck, Pinselauftrag, InkJet, Rakel, Rolle, durch Sprühen oder mittels Dispenserauftrag oder vergleichbaren dem Fachmann bekannten Auftragsmethoden auf die elektrisch leitfähigen und zumindest teilweise transparenten dünnen Beschichtungen aufgebracht und anschließend im Allgemeinen in einem Ofen thermisch behandelt, so dass üblicherweise seitlich entlang einer Substratkante angebrachte Streifen gut mittels Löten, Klemmen oder Stecken elektrisch leitend kontaktiert werden können.

Bevorzugt ist die elektrisch leitfähige Beschichtung zumindest an einer Glaskante mit einem gut leitenden metallischen und einige 1 bis 10 mm breiten Streifen versehen. Dieser Streifen wird bevorzugt drucktechnisch im Siebdruck oder Pinselauftrag, InkJet, Rakel, Rolle, durch Sprühen mit einem Sprühkopf oder mittels Dispenserauftrag oder vergleichbaren dem Fachmann bekannten Auftragsmethoden (wie vorstehend erwähnt) appliziert, getrocknet und einer Temperaturbehandlung unterzogen, wobei ein lötfähiger Kontaktstreifen erhalten wird.

In einer weiteren Ausführungsform werden zumindest zwei Glaskanten derart versetzt angeordnet, so dass ein Kontaktstreifen freiliegend angeordnet ist und so gut z.B. mittels Löten oder Klemmen oder Federkontaktierung oder Reibschweißen beziehungsweise Ultraschallkontaktierung mit Anschlusselementen versehen werden kann.

Ein erfindungsgemäß bevorzugtes Glaselement mit Elektrolumineszenzeffekt auf Basis elektrisch leitfähiger und zumindest teilweise transparenter Beschichtungen benötigt im Allgemeinen möglichst gut elektrisch leitfähige Kontaktierstreifen beziehungsweise so genannte Bus-bars, wobei - wie bereits vorstehend erwähnt - der Einsatz von Bus-bars nicht unbedingt erforderlich ist.

Solange nur geringe elektrische Leistungen auf elektrisch leitfähige Beschichtungen eingeleitet werden müssen, sind Federkontakte oder Carbon-gefüllte Gummielemente beziehungsweise so genannte Zebra-Gummistreifen ausreichend.

Als Leitkleberpasten werden bevorzugt Leitkleberpasten auf Basis von Silber, Palladium, Kupfer oder Gold gefüllter Polymerkleber verwendet. Es können ebenfalls selbstklebende elektrisch leitfähige Streifen zum Beispiel aus verzinnter Kupferfolie mit einem in z-Richtung elektrisch leitfähigen Kleber durch Anpressen appliziert werden.

Die Klebeschicht wird dabei im Allgemeinen mit einigen N/cm² Flächenpressung gleichmäßig angepresst, und es werden so je nach Ausführung Werte von 0,013 Ohm/cm² (z.B. Conductive Copper Foil Tape VE 1691 der Firma D & M International, A-8451 Heimschuh) beziehungsweise 0,005 Ohm (z.B. Type 1183 der Firma 3M Electrical Products Division, Austin, Texas USA; gemäß MIL-STD-200 Method 307 maintained at 5 psi / 3,4 N/cm² measured over 1 sq.in. surface area) oder 0,001 Ohm (z.B. Type 1345 der Firma 3M) oder 0,003 Ohm (z.B. Type 3202 der Firma Holland Shielding Systems BV) erreicht.

### Polymerer Haftvermittler B

Der zumindest teilweise transparente polymere Haftvermittler (klebfähige Zwischenschicht, Verbundmasse) B ist aus einem Kunststoff aufgebaut, der bevorzugt eine relative Dielektrizitätskonstante (Permittivität) gemessen bei 1 kHz von mindestens 30, besonders bevorzugt mindestens 50 aufweist.

Der Ausdruck "Dielektrizitätskonstante" ist dem Fachmann bekannt, Die Dielektrizitätskonstante wird als komplexe Größe verwendet, mit einem Realteil ∈₁ (auch ∈' oder ∈ᵣ) und einem Imaginärteil ∈₂ (auch ∈" oder ∈₁), Dabei können in diesen beiden Komponenten direkt die Beiträge verschiedener Mechanismen im Material (z.B. Bandübergänge) angegeben und in ihrer Frequenzabhängigkeit addiert werden. Über die Kramers-Kronig-Relation kann dann der (dispergierende) Zusammenhang zwischen der komplexen Dielektrizitätskonstanten und den optischen Kenngrößen Brechzahl n und Absorptionskoeffizient k dargestellt werden. Dies führt dann zu den theoretischen Spektren von Absorption und Reflexion, die man mit gemessenen Spektren vergleichen und anpassen kann.

Die Ermittlung der relativen Dielektrizitätskonstanten kann sowohl aus spektroskopischen Daten als auch aus der Wechselwirkung mit einem von außen angelegten elektrischen Feld nach dem Fachmann bekannten Verfahren erfolgen.

Der polymere Haftvermittler B ist auf der Innenseite des ersten zumindest teilweise transparenten Substrats A im Anschluss an die Beschichtung angeordnet. Dabei ist es möglich, dass der polymere Haftvermittler B unmittelbar im Anschluss an die Beschichtung des ersten zumindest teilweise transparenten Substrats A angeordnet ist, oder dass zwischen der Beschichtung des ersten zumindest teilweise transparenten Substrats A und dem polymeren Haftvermittler eine oder mehrere weitere Schichten angeordnet sind. Dabei können beide Isolationsschichten einen gleichen Aufbau oder einen unterschiedlichen Aufbau haben.

Falls eine ohmsche Leitfähigkeit zustande kommt, ist es sinnvoll, eine zusätzliche Isolation in das erfindungsgemäße Verbundglaselement einzubauen. In einer weiteren Ausführungsform der vorliegenden Erfindung ist daher zwischen der Beschichtung des ersten zumindest teilweise transparenten Substrats A und dem polymeren Haftvermittler eine Isolationsschicht E unmittelbar im Anschluss an die Beschichtung angeordnet. Eine solche Isolationsschicht kann in einer weiteren Ausführungsform alternativ zu der erstgenannten Isolationsschicht oder zusätzlich zu der erstgenannten Isolationsschicht unmittelbar im Anschluss an die Beschichtung des zweiten zumindest teilweise transparenten Substrats D angeordnet sein.

Geeignete Isolationsschichten E sind im Stand der Technik bekannt und werden oft auf elektrisch leitfähigen Beschichtungen zwecks Passivierung aufgebracht. Diese Schichten werden im Allgemeinen im Vakuumverfahren oder chemisch in Form oxidischer oder nitridischer dünner und sehr hoch transparenter Schichten ausgeführt. Die Dicke beträgt im Allgemeinen 50 nm 500 nm. Falls zwei Isolationsschichten in dem erfindungsgemäßen Verbundglaselement verwendet werden, kann die Dicke der einzelnen Isolationsschichten identisch oder verschieden sein.

Derartige Isolationsschichten E bieten auch bei hohen Temperaturen eine gute elektrische Isolation und ermöglichen überdies einen guten Haftverbund mit der EL-Leuchtstruktur C beziehungsweise mit dem polymeren Haftvermittler B und sind im Allgemeinen chemisch sehr stabil.

Die vorliegende Erfindung betrifft somit in einer weiteren bevorzugten Ausführungsform ein Verbundglaselement, worin die elektrisch leitfähige Beschichtung der Elektroden A und D zumindest im Bereich der EL-Leuchtstruktur mit einer transparenten und dünnen und isolierenden oxidischen oder nitridischen Isolationsschicht E versehen ist.

Bei der Herstellung des erfindungsgemäßen Verbundglaselements sollte in einer bevorzugten Ausführungsform berücksichtigt werden, dass die gegebenenfalls vorliegenden Isolationsschichten E im Bereich der in einer bevorzugten Ausführungsform der Erfindung vorliegenden Kontaktstreifen (siehe *Leiterbahnen, Anschlüsse der Elektroden)* entfernt werden. Dies wird üblicherweise durch einen Ätzprozess realisiert oder vor der Beschichtung der Elektroden A und D mit der Isolationsschicht E, indem die elektrisch leitfähige Beschichtungen im Bereich der Kontaktstreifen maskiert beziehungsweise abgedeckt werden und anschließend die Isolationsschicht E aufgebracht wird. Grundsätzlich kann die Isolationsschicht E auch mittels üblicher Rollen- oder Vorhanggieß- oder Sprühbeschichtungstechnologien oder mittels Siebdruck erfolgen. Als Isolationsschicht E kann dabei eine transparente dünne Glasfrittenbeschichtung gewählt werden oder eine polymere dünne und transparente Beschichtung.

Bei dem zumindest teilweise transparenten polymeren Haftvermittler B handelt es sich bevorzugt um ein Gießharz oder eine thermoplastische Verbundfolie, wobei die thermoplastische Verbundfolie bevorzugt ausgewählt ist aus der Gruppe bestehend aus Polyvinylbutyral (PVB), Ethylenvinylacetat (EVA), Polyacrylat (PA), Polymethylmethacrylat (PMMA), Polyurethan (PU), Polyvinylalkohol (PVA) und Polyvinylchlorid (PVC), bevorzugt Polyvinylbutyral (PVB).

Geeignete PVB-Folien sind dem Fachmann bekannt und kommerziell erhältlich, z.B. Butacite^{®}, Saflex^{®}, S-Lec^{®} und Trosifol^{®},

Die als polymerer Haftvermittler B bevorzugt eingesetzten thermoplastischen Verbundfolien weisen im Allgemeinen eine Dicke von 100 µm bis 1000 µm, bevorzugt 380 µm beziehungsweise 760 µm auf. Es können eine oder mehrere, z.B. zwei oder drei, Folien verwendet werden.

Wird der polymere Haftvermittler B aus einem Gießharz hergestellt, kann die Dicke wesentlich größer als bei den vorstehend genannten Folien gewählt werden. Geeignete Dicken des polymeren Haftvermittlers bei Einsatz von Gießharz betragen im Allgemeinen 0,5 bis 5,0 mm, bevorzugt 1 mm bis 2 mm. Höhere Foliendicken werden insbesondere bei unebenen Glasflächen, bei großen Formaten und/oder bei hohen Anforderungen an die so genannte Resttragfähigkeit verwendet.

Als polymerer Haftvermittler B wird ganz besonders bevorzugt eine PVB-Folie mit einer Dicke von 0,1 bis 0,76 µm, bevorzugt 0,1 bis 0,38 µm, verwendet. Derartige Folien weisen eine relative Dielektrizitätskonstante von im Allgemeinen 3,5 bis 5 auf und sind nach dem Laminiervorgang zur Herstellung eines Verbundglaselements glasklar transparent. Die Dicke von im Allgemeinen 0,1 bis 0,38 µm wird erfahrungsgemäß bei großflächer Lamination von zwei Glassubstraten zur Erfüllung gebäudetechnischer behördlicher Sicherheitsstandards wie CFR 16 Teil 1201 oder ANSI Z97.1 oder den CEN-Standard EN 12600 z, B, bei Vertikalverglasungen, bei Eingangstüren, bei Sicherheitstüren, bei Schiebetüren, bei Wannen- und Duschtrennwänden, bei Seitenlichten und bei Glaspaneelen benötigt.

In einer bevorzugten Ausführungsform der vorliegenden Erfindung wird der polymere Haftvermittler B so ausgeführt, dass die relative Dielektrizitätskonstante gemessen bei 1 kHz zumindest den Wert 30 erreicht und bevorzugt mindestens 50 ist. Mit der Erhöhung der relativen Dielektrizitätskonstante (Epsilon) um den Faktor 10 beziehungsweise um bevorzugt wesentlich mehr als 10 wird umgerechnet die Dicke des polymeren Haftvermittlers elektrisch analog reduziert und die EL-Versorgungsspannung kann - so wie bei EL-Systemen üblich - auf im Allgemeinen 100 bis 200 Volt-AC belassen werden. Um die Doppelisolationsvorschriften aufgrund der relativ hohen Spannungen zu erfüllen, können in den polymeren Haftvermittler weitere Glassubstrate und/oder Kunststoff-Folien im Sinne eines Verbundglas-Laminierprozesses mitintegriert werden,

Die Erhöhung der Dielektrizitätskonstante des polymeren Haftvermittlers B kann durch Beimengung von funktionalen Teilchen in den üblicherweise bei der Herstellung von Verbundglas eingesetzten polymeren Haftvermittler (geeignete und bevorzugte polymere Haftvermittler sind vorstehend genannt) erfolgen.

Bei den funktionellen Teilchen handelt es sich vorzugsweise um transparente Teilchen, de elektrisch leitfähig sind. Die funktionellen Teilchen weisen vorzugsweise eine hohe Dielektrizitätskonstante auf.

Dabei können vorzugsweise Elemente in Form von nanoskaligen Teilchen, nanoskaligen Agglomeraten, dendritischen Teilchen, submikron- und mikrometergroßen kristallinen Teilchen und Kombinationen davon eingesetzt werden. Diese weisen im Allgemeinen durchschnittliche Teilchendurchmesser im Bereich von 0,5 µm bis 5 µm, bevorzugt 0,5 µm bis 3 µm, besonders bevorzugt 1 µm bis 2 µm, auf. Geeignete Teilchen sind beispielsweise Single-Walled-Carbon-Nano-Tubes (so genannte SWCNTs). Im Folgenden bedeutet der Ausdruck "Single-Walled-Carbon-Nano-Tubes" (SWCNTs) verschiedene Varianten von Kohlenstoff-Nanoröhrchen mit einer einzigen Wand, welche auch Nanofasern mit umfassen können. Bei den Single-Walled-Carbon-Nano-Tubes handelt es sich im Wesentlichen um zumeist zylindrische Kohlenstoffgebilde mit einem Durchmesser von einigen Nanometern. Die Herstellung dieser Single-Walled-Carbon-Nano-Tubes ist dem Fachmann bekannt und es kann auf entsprechende Verfahren des Standes der Technik zurückgegriffen werden. Hierzu zählen beispielsweise die katalytischchemischer Gasphasen-Abscheidung (CCVD).

Diese Verfahren liefern häufig Fraktionen, die sich in Durchmesser, Länge, Chiralität und elektronischen Eigenschaften unterscheiden. Sie treten gebündelt auf und sind häufig mit einem Teil amorphen Kohlenstoff vermischt. Die SWCNTs werden ausgehend von diesen Fraktionen abgetrennt.

Die bisher bekannten Separationsverfahren für SWCNT basieren auf Elektronentransfer-Effekten an metallischen mit Diazoniumsalzen behandelten SWCNT, auf Dielektrophorese, auf einer besonderen chemischen Affinität von halbleitenden Kohlenstoff-Nanoröhrchen zu Oktadecylaminen und auf Kohlenstoff-Nanoröhrchen, die mit einstrangiger DNS umhüllt wurden. Die Selektivität dieser Methoden kann durch intensive Zentrifugation vorbehandelter Dispersionen und Anwendung der lonentauscherchromatografie weiter verbessert werden. Im Rahmen der vorliegenden Erfindung werden vorzugsweise fraktionsreine Single-Walled-Carbon-Nano-Tubes verwendet, d.h. Fraktionen von Single-Walled-Carbon-Nano-Tubes, welche sich hinsichtlich einem Parameter, ausgewählt aus der Gruppe, bestehend aus Durchmesser, Länge, Chiralität und elektronischen Eigenschaften, höchstens um 50 %, besonders bevorzugt höchstens um 40 %, insbesondere um höchstens 30 %, speziell höchstens um 20 %, ganz speziell höchstens um 10 %, unterscheiden.

Die erfindungsgemäß enthaltenen SWCNTs sind allgemein bekannt und kommerziell erhältlich. Die SWCNTs weisen bevorzugt einen äußeren Durchmesser zwischen 1 nm und 50 nm, bevorzugt zwischen 3 nm und 25 nm, besonders bevorzugt zwischen 5 nm und 15 nm, und eine Länge zwischen 1 µm und 100 µm, bevorzugt zwischen 1 µm und 50 µm, besonders bevorzugt zwischen 1 µm und 10 µm auf. SWCNTs können als Reinstoff oder als master batch enthaltend in thermoplastischen Kunststoffen mit dem polymeren Haftvermittlers B bevorzugt homogen gemischt werden. Einzelwandige Kohlenstoffnanoröhren (SWCNTs) sind für den Zweck der vorliegenden Erfindung besonders bevorzugt, da sie dünner sind und höhere Leitfähigkeiten aufweisen, wodurch der gewünschte Effekt bereits bei geringerem Einsatz erzielt werden kann.

Die gegebenenfalls verwendeten SWCNTs können willkürlich orientiert oder gerichtet vorliegen.

Darüber hinaus können auch metallische Nano-Tubes wie beispielsweise Silber-Nano-Tubes verwendet werden. Hinsichtlich metallischer Nanowires wird auf die WO 2007/022226 A2 verwiesen, deren Offenbarung hinsichtlich der dort offenbarten Nanowires durch Bezugnahme in die vorliegende Erfindung eingeschlossen ist. Die in der WO 2007/022226 A2 beschriebenen elektrisch gut leitenden und weitgehend transparenten Silber-Nanowires sind für die vorliegende Erfindung insbesondere geeignet.

Beispiele für weitere geeignete Teilchen sind Bariumtitanat-Teilchen im Bereich von bevorzugt 1,0 bis 2,0 µm. Diese können bei einem hohen Füllgrad eine relative Dielektrizitätskonstante von bis zu 100 ergeben. Des Weiteren können ITO (Indium-Zinn-Oxid) Nanopartikel und/oder weitgehend transparente und elektrisch leitfähige Flakes zugegeben werden. In jedem Fall sollte berücksichtigt werden, dass der polymere Haftvermittler B mit den diversen funktionellen Teilchen dispergiert in dem polymeren Haftvermittler zumindest teilweise transparent bleibt.

Der polymere Haftvermittler kann die vorstehend genannten Teilchen in einer Menge von 0 bis 70 Gew.-%, bevorzugt 0,5 bis 30 Gew.-%, besonders bevorzugt 1 bis 20 Gew.-% (bezogen auf den eingesetzten polymeren Haftvermittler) enthalten. Die dem polymeren Haftvermittler B beigemengten Teilchen werden bevorzugt in einer derartigen Konzentration beigefügt werden, dass nach der Lamination des Verbundglaselements die Perkulation (=percolation) der Teilchen, also die elektrische Leitfähigkeit aufgrund direkter elektrischer Kontakte der einzelnen beigemengten Teilchen, zumindest in den Bereichen zwischen den einzelnen Leuchtelementen der EL-Leuchtstruktur C zu keiner ohmschen Leitfähigkeit in z-Richtung des polymeren Haftvermittlers führt.

Ein weiterer Gegenstand der vorliegenden Erfindung ist daher ein Verbundglaselement, wobei das Gießharz oder die thermoplastische Verbundfolie eine Verbundmassenmatrix bildet, der weitgehend transparente Elemente in Form von nanoskaligen Teilchen, nanoskaligen Agglomeraten, dendritischen Teilchen, submikron- und mikrometergroßen kristallinen Teilchen und Kombinationen davon beigemengt sind. Geeignete Teilchengrößen, Mengen sowie geeignete Teilchen sind vorstehend genannt.

In einer besonders bevorzugten Ausführungsform betrifft die vorliegende Erfindung somit ein Verbundglaselement, wobei der zumindest teilweise transparente polymere Haftvermittler B aus einer Polyvinylbutyral (PVB) Folie von 0,1 bis 0,76 mm, bevorzugt 0,1 bis 0,38 mm, gebildet wird und durch die Beimengung von weitgehend transparenten Elementen in Form von oben bereits erwähnten nanoskaligen Teilchen, nanoskaligen Agglomeraten, dendritischen Teilchen, submikron- oder mikrometer großen kristallinen Teilchen beziehungsweise Kombinationen der genannten Teilchen eine hohe relative Dielektrizitätskonstante von bevorzugt mindestens 30, besonders bevorzugt mindestens 50 aufweist. Dadurch wird gleichzeitig eine ausreichende elektrische Isolation bewirkt.

In einer weiteren Ausführungsform betrifft die vorliegende Erfindung ein Verbundglaselement, wobei der zumindest teilweise transparente polymere Haftvermittler eine thermoplastische Verbundfolie ist, die mit einem elektrisch leitfähigen Metallgewebe durchwirkt ist. Geeignete Metallgewebe sind dem Fachmann bekannt. Bevorzugt weist die Verbundfolie eine Dicke von 0,1 bis 0,38 mm auf.

### Elektrolumineszenz-Leuchtstruktur C

Die mindestens eine Elektroluminezenz (EL)-Leuchtstruktur C, ist im Anschluss an den polymeren Haftvermittler auf der Innenseite des ersten zumindest teilweise transparenten Substrats angeordnet. Dabei kann die EL-Leuchtstruktur C unmittelbar im Anschluss an den polymeren Haftvermittler B angeordnet sein oder es können gegebenenfalls eine oder mehrere weitere Schichten zwischen dem polymeren Haftvermittler B und der EL-Leuchtstruktur C angeordnet sein. Bevorzugt ist die EL-Leuchtstruktur C unmittelbar im Anschluss an den polymeren Haftvermittler B angeordnet. Der Ausdruck "auf der Innenseite des ersten zumindest teilweise transparenten Substrats" soll im Sinne der vorliegenden Anmeldung so verstanden werden, dass damit die Reihenfolge und Richtung der einzelnen das erfindungsgemäße Verbundglaselement bildenden Schichten beschrieben wird und bedeutet im vorliegenden Fall, dass die erste Schicht durch ein erstes zumindest teilweise transparentes Substrat gebildet wird, das durch Beschichtung auf der Innenseite elektrisch leitfähig ist (erste Elektrode A), die zweite Schicht gegebenenfalls eine Isolatorschicht E ist, die auf der Beschichtung der Elektrode A angeordnet ist, die darauf (also auf die Beschichtung der Elekrode A oder ggf. die Isolatorschicht E) folgende Schicht der polymere Haftvermittler B ist und darauf bevorzugt die EL-Leuchtstruktur C angeordnet ist. Fertigungstechnisch wird die EL-Leuchtstruktur C jedoch bevorzugt auf den formstabilen Substraten mit deren Elektrodenschichten A oder D beziehungsweise der optionalen Isolierschichten E oder F mittels Siebdruck, Ink-Jet-Druck, Dispenserapplikation, Sprühen, Rollenbeschichtung, Vorhanggießen und dergleichen Beschichtungs- bzw. Drucktechnologien aufgebracht werden. Die EL-Leuchtstruktur C kann daher sowohl auf der Innenseite des ersten Substrates mit der Elektrode A beziehungsweise optional der Isolierschicht E oder auf dem zweiten Substrat mit der Elektrode D beziehungsweise optional der Isolierschicht F aufgedruckt beziehungsweise beschichtet werden.

Die mindestens eine Elektroluminezen (EL)-Leuchtstruktur kann auf der gesamten Innenfläche des ersten bzw, zweiten zumindest teilweise transparenten Substrats angeordnet sein oder auf einer oder mehreren Teilflächen des ersten zumindest teilweise transparenten Substrats. In dem Fall, dass die Leuchtstruktur auf mehreren Teilflächen angeordnet ist, haben die Teilflächen im Allgemeinen einen Abstand von 0,5 bis 10,0 mm, bevorzugt 1 bis 5 mm voneinander.

Die EL-Leuchtstruktur C ist im Allgemeinen aus einer Bindemittelmatrix mit darin homogen dispergierten EL-Pigmenten aufgebaut. Die Bindemittelmatrix wird im Allgemeinen so gewählt, dass ein guter Haftverbund auf der Elektrodenschicht C (bzw. der ggf, darauf aufgebrachten Isolationsschicht E) gegeben ist, und dass in einem nachfolgenden Laminierverfahren ein guter Haftverbund mit dem polymeren Haftvermittler B möglich ist. In einer bevorzugten Ausführung werden dabei PVB oder PU basierende Systeme verwendet. Neben den EL-Pigmenten können ggf. noch weitere Zusätze in der Bindemittelmatrix vorliegen, wie farbkonvertierende organische und/oder anorganische Systeme, Farbzusatzstoffe für einen Tag- und Nacht-Lichteffekt und/oder reflektierende und/oder Licht absorbierende Effektpigmente wie Aluminiumflakes oder Glasflakes oder Mica-Plateletts. Im Allgemeinen beträgt der Anteil der EL-Pigmente an der Gesamtmasse der EL-Leuchtstruktur (Füllgrad) 20 bis 75 Gew.-%, bevorzugt 50 bis 70 Gew,-%, Bevorzugt ist die mindestens eine EL-Leuchtstruktur C eine Wechselstrom-Dickfilm-Pulver-Elektrolumineszenz (AC-P-EL)-Leuchtstruktur,

Dickfilm AC-EL Systeme sind seit Destriau 1936 gut bekannt und werden meist mittels Siebdruck auf ITO-PET Folien appliziert. Da zinksulfidische Elektroluminophore im Betrieb und speziell bei höheren Temperaturen und einer Wasserdampfumgebung eine sehr starke Degradation aufweisen, werden heute für langlebige Dickfilm AC-EL Lampenaufbauten im Allgemeinen mikroverkapselte EL-Phosphore (Pigmente) verwendet. Es ist jedoch ebenfalls möglich, in dem erfindungsgemäßen Verbundglaselement nicht mikroverkapselte Pigmente einzusetzen, wie nachstehend weiter ausgeführt wird.

Unter EL-Folien beziehungsweise EL-Lampen beziehungsweise EL-Elementen werden im Sinne der vorliegenden Anmeldung Dickfilm-EL Systeme verstanden, die mittels Wechselspannung bei normativ 100 Volt und 400 Hertz betrieben werden und derart ein so genanntes kaltes Licht von einigen cd/m² bis zu einigen 100 cd/m² emittieren. In derartigen anorganischen Dickfilm-Wechselspannungs-EL-Elementen werden im Allgemeinen EL-Siebdruckpasten verwendet.

Derartige EL-Siebdruckpasten werden im Allgemeinen auf Basis anorganischer Substanzen aufgebaut. Geeignete Substanzen sind z,B, hochreine ZnS, CdS, ZnₓCd₁₋ₓS Verbindungen der Gruppen II und IV des Periodensystems der Elemente, wobei besonders bevorzugt ZnS eingesetzt wird. Die vorstehend genannten Substanzen können dotiert oder aktiviert werden und gegebenenfalls des Weiteren coaktiviert werden. Zur Dotierung werden z.B. Kupfer und/oder Mangan eingesetzt. Die Coaktivierung erfolgt z.B. mit Chlor, Brom, Iod und Aluminium. Der Gehalt an Alkali- und Selten-Erd-Metallen ist in den vorstehend genannten Substanzen im Allgemeinen sehr gering, falls diese überhaupt vorliegen. Ganz besonders bevorzugt wird ZnS eingesetzt, das bevorzugt mit Kupfer und/oder Mangan dotiert beziehungsweise aktiviert wird und bevorzugt mit Chlor, Brom, Iod und/oder Aluminium coaktiviert wird.

Übliche EL-Emissionsfarben sind gelb, grün, grün-blau, blau-grün und weiß, wobei die Emissionsfarbe weiß oder rot durch Mischungen geeigneter EL-Phosphore (Pigmente) gewonnen werden kann oder durch Farbkonversion. Die Farbkonversion kann im Allgemeinen in Form einer konvertierenden Schicht und/oder der Beimengung entsprechender Farbstoffe und Pigmente in den polymeren Binder der Siebdruckfarben beziehungsweise der polymeren Matrix, in die die EL-Pigmente eingebaut sind, erfolgen.

In einer weiteren Ausführungsform der vorliegenden Erfindung sind der polymere Haftvermittler B und/oder die zur Herstellung der EL-Leuchtstruktur eingesetzte Siebdruckmatrix mit lasierenden, farbfilternden oder mit farbkonvertierenden Farbstoffen und/oder Pigmenten versehen sind. Auf diese Weise kann eine Emissionsfarbe Weiß oder ein Tag-Nacht-Lichteffekt generiert werden.

In einer weiteren Ausführungsform werden in der EL-Leuchtstruktur C Pigmente eingesetzt, die eine Emission im blauen Wellenlängenbereich von 420 bis 480 nm aufweisen und mit einer farbkonvertierenden Mikroverkapselung versehen sind. Auf diese Weise kann die Farbe Weiß emittiert werden.

In einer Ausführungsform werden als Pigmente in der EL-Leuchtstruktur C AC-P-EL Pigmente eingesetzt, die eine Emission im blauen Wellenlängenbereich von 420 bis 480 nm aufweisen. Zusätzlich weist die AC-P-EL Siebdruckmatrix bevorzugt wellenlängenkonventierende anorganische feine Partikel auf Basis von Europium (II) aktivierten Erdalkali-ortho-Silikat Phosphoren wie (Ba, Sr, Ca)₂SiO₄:Eu²⁺ oder YAG Phosphoren wie Y₃Al₅O₁₂:Ce³⁺ oder Tb₃Al₅O₁₂:Ce³⁺ oder Sr₂GaS₄:Eu²⁺ oder SrS:Eu²⁺ oder (Y,Lu,Gd,Tb)₃(Al,Sc,Ga)₅O₁₂:Ce³⁺ oder (Zn,Ca,Sr)(S,Se):Eu²⁺ auf. Auf diese Weise kann eine weiße Emission erzielt werden.

Entsprechend dem Stand der Technik können die vorstehen genannten 'EL-Phosphor'-Pigmente mikroverkapselt werden. Durch die anorganische Mikroverkapselungstechnologie sind gute Halbwertszeiten erzielbar. Beispielhaft sei hier das EL-Siebdrucksystem Luxprint® for EL der Firma E.I. du Pont de Nemours and Companies genannt. Organischen Mikroverkapselungstechnologien und Follenhüll-Laminate auf Basis der diversen thermoplastischen Folien sind grundsätzlich ebenfalls geeignet, haben sich jedoch als teuer und nicht wesentlich lebensdauerverlängernd erwiesen.

Geeignete zinksulfidische mikroverkapselte EL-Phosphore (Pigmente) werden von der Firma Osram Sylvania, Inc, Towanda unter dem Handelsnamen GlacierGLO€ Standard, High Brite und Long Life und von der Firma Durel Division der Rogers Corporation, unter den Handelsnamen 1PHS001® High-Efficiency Green Encapsulated EL Phosphor, 1PHS002® High-Efficiency Blue-Green Encapsulated EL Phosphor, 1PHS003® Long-Life Blue Encapsulated EL Phosphor, 1PHS004® Long-Life Orange Encapsulated EL Phosphor, angeboten.

Die mittleren Teilchendurchmesser der in der EL-Leuchtstruktur geeigneten mikroverkapselten Pigmente betragen im Allgemeinen 15 bis 60 µm, bevorzugt 20 bis 35 µm.

In der vorliegenden Erfindung werden bevorzugt anorganische Gläser als zumindest teilweise transparente Substrate eingesetzt. Diese bieten eine hervorragende Barriere für Wasserdampf und Sauerstoff. Daher können in der EL-Leuchtstruktur C des erfindungsgemäßen Verbundglaselements auch nicht mikroverkapselte feinkörnige EL-Pigmente, bevorzugt mit einer hohen Lebensdauer, eingesetzt werden. Geeignete nicht mikroverkapselte feinkörnige zinksulfidische EL-Phosphore sind z.B. in US 6,248,261 und in WO 01/34723 offenbart. Diese weisen bevorzugt ein kubisches Kristallgefüge auf. Die nicht mikroverkapselten Pigmente haben bevorzugt mittlere Teilchendurchmesser von 1 bis 30 µm, besonders bevorzugt 2 bis 15 µm, ganz besonders bevorzugt 5 bis 10 µm.

Speziell nicht mikroverkapselte EL-Pigmente können mit kleineren Pigmentabmessungen bis unter 10 µm verwendet werden. Dadurch kann die Durchsichtigkeit des Glaselementes erhöht werden.

Somit können den gemäß der vorliegenden Anmeldung geeigneten Siebdruckfarben unverkapselte Pigmente beigemengt werden, bevorzugt unter Berücksichtigung der speziellen hygroskopischen Eigenschaften der Pigmente, bevorzugt der ZnS-Pigmente. Dabei werden im Allgemeinen Bindemittel verwendet, die einerseits eine gute Adhäsion zu sogenannten ITO-Schichten (Indium-ZinnOxid) oder intrinsisch leitfähige polymeren transparenten Schichten haben, und des Weiteren gut isolierend wirken, das Dielektrikum verstärken und damit eine Verbesserung der Durchschlagsfestigkeit bei hohen elektrischen Feldstärken bewirken und zusätzlich im ausgehärteten Zustand eine gute Wasserdampfsperre aufweisen und die Phosphorpigmente zusätzlich schützen und lebensdauerverlängernd wirken.

In einer Ausführungsform der vorliegenden Erfindung werden in der mindestens einen AC-P-EL-Leuchtstruktur Pigmente eingesetzt, die nicht mikroverkapselt sind.

Die Halbwertzeiten der geeignete Pigmente in der EL-Struktur C aufweisenden Verbundglaselemente, also jene Zeit, in der die Initialhelligkeit des erfindungsgemäßen Verbundglaselements auf die Hälfte abgesunken ist, betragen im Allgemeinen bei 100 bzw. 80 Volt und 400 Hertz 400 bis maximal 5000 Stunden, üblicherweise jedoch nicht mehr als 1000 bis 3500 Stunden. Die Halbwertszeit der erfindungsgemäßen Verbundglaselemente mit EL-Leuchtstruktur ist hoch, da die bevorzugt eingesetzten Glassubstrate des erfindungsgemäßen Verbundglaselements in Verbindung mit dem polymeren Haftvermittler B Elektroluminophore sehr gut gegen Wasserdampfeinwirkung schützen.

Die Helligkeitswerte (EL-Emission) betragen im Allgemeinen 1 bis 200 cd/m², bevorzugt 3 bis 100 cd/m², und liegen bei großen Leuchtflächen besonders bevorzugt im Bereich von 1 bis 20 cd/m².

Es können jedoch auch Pigmente mit längeren oder kürzeren Halbwertszeiten und höheren oder niedrigeren Helligkeitswerten in den EL-Strukturen des erfindungsgemäßen Verbundglaselements eingesetzt werden.

Üblicherweise werden die vorstehend genannten Phosphorpasten (Siebdruckpasten) auf transparente Kunststoff-Folien oder Gläser aufgebracht, die wiederum eine weitgehend transparente elektrisch leitende Beschichtung aufweisen und dadurch die Elektrode für die Sichtseite darstellen (im vorliegenden erfindungsgemäßen Verbundglaselement entspricht die genannte Elektrode der Elektrode D, wobei die EL-Leuchtstruktur gegebenenfalls auf die gegebenenfalls vorliegende Isolationsschicht E aufgebracht wird). Anschließend werden drucktechnisch und/oder laminationstechnisch das Dielektrikum (polymerer Haftvermittler B) und die Rückseitenelektrode (im vorliegenden erfindungsgemäßen Verbundglaselement die Elektrode A) hergestellt.

Es ist jedoch ebenfalls ein umgekehrter Herstellungsprozess möglich, wobei zunächst die Rückseitenelektrode (im vorliegenden erfindungsgemäßen Verbundglaselement die Elektrode A) hergestellt wird oder die Rückseitenelektrode in Form einer metallisierten Folie verwendet wird und auf diese Elektrode - ggf. nach Aufbringen der Isolationsschicht E - das Dielektrikum (polymerer Haftvermittler B) aufgetragen wird. Anschließend wird die Phosphorpaste EL-Leuchtstruktur C) und daran anschließend die transparente und elektrisch leitende obere Elektrode A aufgetragen. Das erhaltene System kann anschließend gegebenenfalls mit einer transparenten Deckfolie laminiert und damit gegen Wasserdampf bzw. auch gegen mechanische Beschädigung geschützt werden.

Die EL-Leuchtstruktur C wird üblicherweise drucktechnisch mittels Siebdruck oder Dispenserauftrag oder InkJet-Auftrag oder auch mit einem Rakelvorgang oder einem Rollenbeschichtungsverfahren oder einem Vorhanggießverfahren oder einem Transferverfahren, bevorzugt mittels Siebdruck, aufgebracht, Bevorzugt wird die EL-Leuchtstruktur auf die Oberfläche der Elektrode D oder die ggf, auf die Elektrode D aufgebrachte Isolationsschicht E aufgebracht.

Ein weiterer Gegenstand der vorliegenden Anmeldung ist ein Verfahren zur Herstellung des erfindungsgemäßen Verbundglaselements, wobei die mindestens eine Elektrolumineszenz-Leuchtstruktur C mittels Siebdruck auf den Haftvermittler B aufgebracht wird. Besonders bevorzugt werden AC-P-EL Pigmente in einer PVB-Matrix dispergiert sind und mittels Siebdruck grafisch gestaltet appliziert.

In einer weiteren Ausführungsform wird das als Bindemittel eingesetzte PVB mit den Pigmenten, bevorzugt AC-P-EL-Pigmenten, und zusammen mit Teilchen, die die relative Dielektrizitätskonstante erhöhen, mittels Extrusion oder Gießtechnik hergestellt. Geeignete Teilchen, die die Dielektrizitätskonstante erhöhen, sind die bezüglich des polymeren Haftvermittlers B genannten die Dielektrizitätskonstante erhöhenden Teilchen.

In einer weiteren Ausführungsform wird das als Bindemittel eingesetzte PVB mittels Koextrusion hergestellt und dabei werden die Pigmente, bevorzugt AC-P-EL Pigmente, ohne die Dielektrizitätskonstante erhöhende Teilchen in einer PVB-Schicht auf eine PVB-Schicht mit die Dielektrizitätskonstante erhöhenden Teilchen extrudiert.

Bevorzugt ist die mindestens eine Elektrolumineszenz-Leuchtstruktur grafisch gestaltet angeordnet. Dabei wird die grafisch gestaltete Elektrolumineszenz-Leuchtstruktur besonders bevorzugt aus einer Vielzahl von Leuchtelementen gebildet, wobei die einzelnen Leuchtelemente aus beliebigen Zeichen, bevorzugt Punkten, Rechtecken, Dreiecken, Vierecken, Linien, Kreisen, Sternen und/oder Buchstaben gebildet werden, die geometrisch exakt oder willkürlich im Anschluss an den zumindest teilweise transparenten polymeren Haftvermittler B angeordnet sind. Unter einer exakten Anordnung wird im Sinne der vorliegenden Anmeldung unter anderem eine Anordnung in Form von Ziffern, Text oder Logos verstanden. Des Weiteren wird unter einer exakten Anordnung eine regelmäßige Anordnung verstanden. Die Größe der einzelnen Leuchtelemente beträgt im Allgemeinen wenige mm, bevorzugt 1 bis 10 mm.

Die Leuchtelemente der mindestens einen EL-Leuchtstruktur und/oder - bei Einsatz von mehr als einer Elektrolumineszenz-Leuchtstruktur - die Elektrolumineszenz-Leuchtstrukturen können gleiche oder verschiedene Emissionsfarben aufweisen. Bevorzugt weisen die Leuchtelemente der mindestens einen EL-Leuchtstruktur und/oder - bei Einsatz von mehr als einer Elektrolumineszenz-Leuchtstruktur - die Elektrolumineszenz-Leuchtstrukturen verschiedene Emissionsfarben auf, Geeignete Emissionsfarben sind vorstehend genannt.

In einer Ausführungsform der vorliegenden Erfindung kann das erfindungsgemäße Verbundglaselement bei nicht elektrisch aktiv geschalteter Leuchtstruktur zumindest bereichsweise beziehungsweise stückweise transparent sein.

In einer weiteren Ausführungsform der vorliegenden Erfindung weisen die in der EL-Leuchtstruktur C vorliegenden Pigmente einen derart kleinen mittleren Teilchendurchmesser auf, beziehungsweise einen derart geringen Füllgrad in der EL-Leuchtstruktur, beziehungsweise im einzelnen Leuchtelement, beziehungsweise die einzelnen Leuchtelemente sind geometrisch derart klein ausgeführt, beziehungsweise der Abstand der einzelnen Leuchtelemente wird derart groß gewählt, so dass das Verbundglaselement bei nicht elektrisch aktivierter Leuchtstruktur als zumindest teilweise durchsichtig gestaltet ist beziehungsweise eine Durchsicht gewährleistet ist, Geeignete Pigmentteilchendurchmesser, Füllgrade, Abmessungen der Leuchtelemente und Abstände der Leuchtelemente sind vorstehend genannt.

In einer weiteren Ausführungsform der vorliegenden Erfindung ist die Leuchtstruktur derart gestaltet ist, dass im elektrisch aktiven und Licht emittierenden Zustand auf Grund der Lambert'schen Strahlcharakteristik eines einzelnen Leuchtelementes keine Durchsicht durch das Glaselement gegeben ist.

### Herstellungsverfahren

Das erfindungsgemäße Verbundglaselement bzw. das erfindungsgemäße Isolierglas-Element können nach dem Fachmann bekannten Verfahren hergestellt werden.

Bezüglich der Herstellung der einzelnen Komponenten des Verbundglaselements und der Aufbringung der einzelnen Schichten wird auf die in der vorstehenden Beschreibung genannten Verfahren hingewiesen. Aus den Komponenten des Verbundglaselements wird nach der Aufbringung der gewünschten Schichten das erfindungsgemäße Verbundglaselement im Allgemeinen durch Laminieren erhalten. Geeignete Verfahren zum Laminieren sind dem Fachmann bekannt und erfolgen nach dem Stand der Technik üblicherweise mit einer Vorlamination und einer Lamination in einem Autoklaven.

Ein weiterer Gegenstand der vorliegenden Anmeldung ist daher ein Verfahren zur Herstellung eines erfindungsgemäßen Verbundglaselements, wobei zunächst ein Schichtverbund umfassend die Komponenten A, B, C und D sowie gegebenenfalls weitere Komponenten E oder F hergestellt wird und dieser Schichtverbund anschließend bei erhöhter Temperatur und erhöhtem Druck zu einer unlösbaren Einheit verbunden wird. Geeignete Temperaturen und Drucke sind vorstehend genannt.

### Verwendung

Das erfindungsgemäße Verbundglaselement kann grundsätzlich in allen Anwendungen eingesetzt werden, in denen Verbundglaselemente üblicherweise eingesetzt werden. Durch die integrierte EL-Leuchtstruktur sind insbesondere Anwendungen als Dekorelemente oder als Sicherheitselemente im Außen- und Innenbereich denkbar.

Ein weiterer Gegenstand der vorliegenden Anmeldung ist daher die Verwendung eines erfindungsgemäßen Verbundglaselements als Dekorelement und/oder Leuchtelement in Innenräumen oder zur Außenanwendung, bevorzugt an Außenfassaden von Gebäuden, in oder an Einrichtungsgegenständen, in oder an Land-, Luft- oder Wasserfahrzeugen oder in der Werbebranche.

Die vorliegende Erfindung wird nachstehend anhand von Figuren näher erläutert. Die Figuren stellen bevorzugte Ausführungsformen dar und sind nicht einschränkend zu verstehen.

### Figuren

Dabei zeigt:
**Figur 1****:** eine schematische Darstellung eines beispielhaften Querschnitts durch ein Verbundglaselement (1) mit symmetrischer Anordnung der zumindest zwei Glaselemente (3, 4) in einem nicht laminierten Zustand.
**Figur 2****:** eine schematische Darstellung eines beispielhaften Querschnitts durch ein Verbundglaselement (1) mit symmetrischer Anordnung der zumindest zwei Glaselemente (3, 4) inklusive von zwei dünnen Isolationsschichten (19, 20) in einem nicht laminierten Zustand.
**Figur 3****:** eine schematische Darstellung eines beispielhaften Querschnitts durch ein Verbundglaselement (1) mit symmetrischer Anordnung der zumindest zwei Glaselemente (3, 4) mit einem koextrudierten Verbundfilm (12') in einem nicht laminierten Zustand.
**Figur 4****:** eine schematische Darstellung eines beispielhaften Querschnitts durch ein Verbundglaselement (1) mit asymmetrischer Anordnung der zumindest zwei Glaselemente (3, 4) in einem nicht laminierten Zustand.
**Figur 5****:** eine schematische Darstellung eines beispielhaften Verbundglaselements (1) mit asymmetrischer seitlich versetzter Anordnung der zumindest zwei Glaselemente (3, 4) in Draufsicht.
**Figur 6****:** eine schematische Darstellung eines beispielhaften Verbundglaselements (1) mit asymmetrischer nach rechts und nach oben versetzter Anordnung der zumindest zwei Glaselemente (3, 4) in Draufsicht.
**Figur 7****:** eine schematische Darstellung eines beispielhaften Verbundglaselements (1) mit symmetrischem Überstand der zumindest zwei Glaselemente (3, 4) in Draufsicht.
**Figur 8****:** eine schematische Darstellung eines beispielhaften Querschnitts durch ein Isolierglaselement (2) mit einem Verbundglaselement (1) mit symmetrischer Anordnung der zumindest zwei Glaselemente (3, 4).
**Figur 9****:** eine schematische Darstellung eines beispielhaften Gebäudes (25) mit Glaselementen (1, 2).
**Figur 10****:** eine schematische Darstellung eines beispielhaften Wandelements (26) mit einem Rahmen (27) und integriertem Glaselement (1, 2).
**Figur 11****:** eine schematische Darstellung einer beispielhaften Leuchte (28).

### Bezugszeichenliste

1 Verbundglaselement mit einer EL-Leuchtstruktur, bevorzugt einer anorganischen Wechselstrom-Dickfilm-Pulver-Elektrolumineszenz (AC-P-EL) Leuchtstruktur
2 Isolierglas-Elementes mit zumindest einem Verbundglaselement mit einer EL-Leuchtstruktur, bevorzugt einer anorganischen Wechselstrom-Dickfilm-Pulver-Elektrolumineszenz (AC-P-EL) Leuchtstruktur
3 Erstes Glaselement (zumindest teilweise transparentes Substrat): Floatglas bzw. eisenoxidarmes Weisglas oder Einscheiben-Sicherheits-Glas (ESG) oder teilvorgespanntes Glas (TVG) oder Verbund-Sicherheits-Glas (VSG)
4 Zweites Glaselement (zumindest teilweise transparentes Substrat): Floatglas bzw, eisenoxidarmes Weisglas oder Einscheiben-Sicherheits-Glas (ESG) oder teilvorgespanntes Glas (TVG) oder Verbund-Sicherheits-Glas (VSG)
5 Drittes Glaselement: Floatglas bzw, eisenoxidarmes Weisglas oder Einscheiben-Sicherheits-Glas (ESG) oder teilvorgespanntes Glas (TVG) oder Verbund-Sicherheits-Glas (VSG)
6 Erste Elektrode (elektrisch leitfähige Beschichtung): weitgehend transparente dünne und elektrisch leitfähige Beschichtung
7 Zweite Elektrode (elektrisch leitfähige Beschichtung): weitgehend transparente dünne und elektrisch leitfähige Beschichtung
8 Kontaktstreifen rechts
9 Kontaktstreifen links
10 EL-Anschluß rechts
11 EL-Anschluß links
12 VSG-Verbundmasse (polymerer Haftvermittler): insbesondere PVB-Folie mit < 0,38 mm Dicke beziehungsweise 12' in der Form einer koextrudierten Folie
13 Funktionale Teilchen in der VSG-Matrix (Matrix des polymeren Haftvermittlers)
14 VSG-Matrix
15 EL-Emission
16 EL-Leuchtstruktur, bevorzugt anorganische Wechselstrom-Dickfilm-Pulver-Elektrolumineszenz (AC-P-EL) Leuchtstruktur
17 EL-Phosphor Partikel beziehungsweise Pulver
18 EL-Bindematrix
19 Erste Isolationsschicht
20 Zweite Isolationsschicht
21 Abstandshalter: beispielsweise ein Aluminium-Profil
22 Sekundärdichtung
23 Trockenmittel im Inneren des Abstandshalterprofils
24 Öffnung im Abstandshalterprofil zum Isolierglashohlraum
25 Gebäude
26 Wand: Mauerwerk eines Gebäudes, Außenteil eines Land-, Wasser- oder Luftfahrzeuges, Außenteil eines Containers und dergleichen
27 Rahmen
28 Lampe beziehungsweise Leuchte
29 Einzelnes grafisch gestaltetes Leuchtelement: z.B. Punkt, Quadrat, Dreieck, Rechteck beziehungsweise Linie, Stern beziehungsweise Vieleck, Kreisring
30 Regelmäßig angeordnete Leuchtelemente
31 Zufällig angeordnete Leuchtelemente
32 Grafisch gestaltete Anordnung einzelner Leuchtelemente

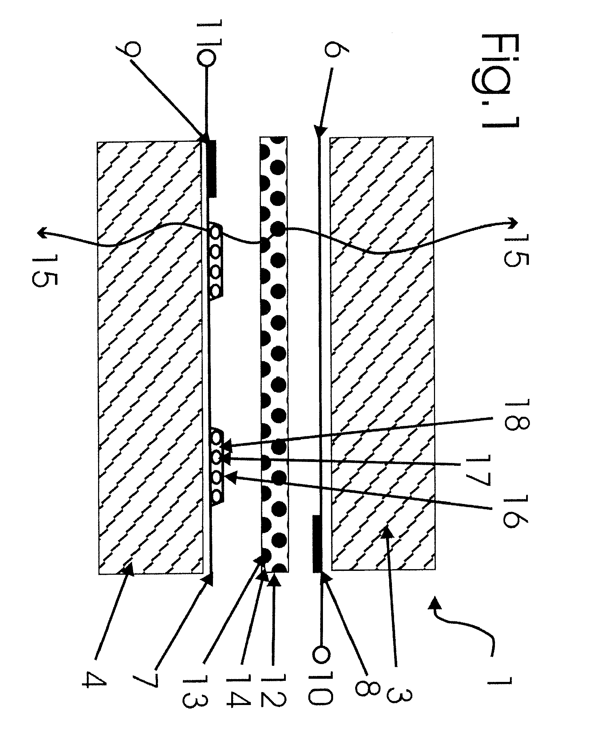

**In** **Figur 1** wird eine schematische Darstellung eines beispielhaften Querschnitts durch ein Verbundglaselement (1) mit symmetrischer Anordnung der zumindest zwei Glaselemente (3, 4) in einem nicht laminierten Zustand gezeigt. Eine derartige symmetrische und übereinander liegende Anordnung der Glaselemente (3, 4) ist auch in der Art realisierbar, dass beide Kontaktstreifen (8, 9) auf einer Seite liegen und die Anschlüsse (10, 11) ebenfalls auf einer Seite liegen. Grundsätzlich können jedoch die Kontaktstreifen um alle 4 Kanten gezogen werden. Die Art der Anordnung und der Ausbildung der Kontaktstreifen (8, 9) und der EL-Anschlüsse (10, 11) hängt u.a. von der Größe des Verbundglaselements (1) ab und vom Flächenwiderstand der beiden transparenten Elektroden (6, 7) und von der gewünschten Emissionshelligkeit (15).

In der Anordnung der Kontaktstreifen (8, 9) an den Seitenrändern der übereinander liegenden Glaselemente (3, 4) muss die Dicke des Kontaktstreifens (8, 9) und die Dicke der Anschlüsse (10, 11) auf die Dicke der VSG-Verbundmasse (12) abgestimmt werden. Zusätzlich muss auf eine entsprechende Isolation in diesen Bereichen geachtet werden. Dabei kann der jeweils einem Kontaktstreifen (8, 9) gegenüberliegende Elektrodenbereich (6, 7) weggeschliffen, weggeätzt oder weggestrahlt werden, oder es kann eine kleine Ritzung, Fräsung oder Laserung durchgeführt werden. Dabei wird der Elektrodenbereich (6, 7) unterhalb der Kontaktstreifen (8, 9) vom Rest der Elektroden (6, 7) elektrisch isoliert.

Die EL-Leuchtstruktur, bevorzugt die AC-P-EL Leuchtstruktur, (16) wird üblicherweise drucktechnisch mittels Siebdruck, Dispenserauftrag oder InkJet-Auftrag oder auch mit einem Rakelvorgang, einem Rollenbeschichtungsverfahren, einem Vorhanggießverfahren oder einem Transferverfahren auf der Oberfläche der Elektrode (6) angebracht. Die Leuchtstruktur (16) umfasst üblicherweise eine Bindemittelmatrix (18) mit darin homogen dispergierten EL-Pigmenten (17). Die Bindemittelmatrix (18) wird im Allgemeinen so gewählt, dass ein guter Haftverbund auf der Elektrodenschicht (6) gegeben ist und dass in einem nachfolgenden Laminierverfahren ein guter Haftverbund mit der VSG-Verbundmasse (12) möglich ist. In einer bevorzugten Ausführung werden dabei PVB oder PU basierende Systeme verwendet. Neben den EL-Pigmenten (17) können noch weitere Zusätze in der Bindemittelmatrix (18) sinnvoll sein, wie farbkonvertierende organische oder anorganische Systeme und des Weiteren Farbzusatzstoffe für einen Tag- und Nacht-Lichteffekt und/oder reflektierende und/oder Licht absorbierende Effektpigmente, wie Aluminiumflakes oder Glasflakes oder Mica-Plateletts. Die EL-Pigmente (17) können mikroverkapselt oder nicht mikroverkapselt verwendet werden. Speziell nicht mikroverkapselte EL-Pigmente (17) können auch mit kleineren Pigmentabmessungen bis unter 10 µm verwendet werden, so dass die Durchsichtigkeit des Glaselementes (1) erhöht werden kann. Die EL-Emission (15) wird bei kann großflächigen Anwendungen 5 cd/m² bis über 100 cd/m² betragen (weitere Angaben sind dem vorstehenden Beschreibungsteil zu entnehmen). Die Lebensdauer beziehungsweise die Halbwertszeit, also jene Zeit, in der die Initialhelligkeit (15) des Glaselementes (1) auf die Hälfte abgesunken ist, ist beträchtlich höher verglichen zu heute üblichen Lebensdauerwerten von etwa 2.000 bis 3.500 Stunden, da die beiden Glassubstrate (3, 4) in Verbindung mit der VSG-Verbundmasse (12) die Elektroluminophore (17) sehr gut gegen Wasserdampfeinwirkung schützen. Bei Außenanwendungen in Gebäudefassaden kann es sinnvoll sein, zusätzlich zur normalen UV-Filterung von Glassubstraten ab etwa 380 nm eine weitere UV-Schutzschicht vorzusehen, wobei bei geeigneter Ausbildung der Elektrodenschicht (6) auch diese Schicht UV-Filterwirkung aufweist.

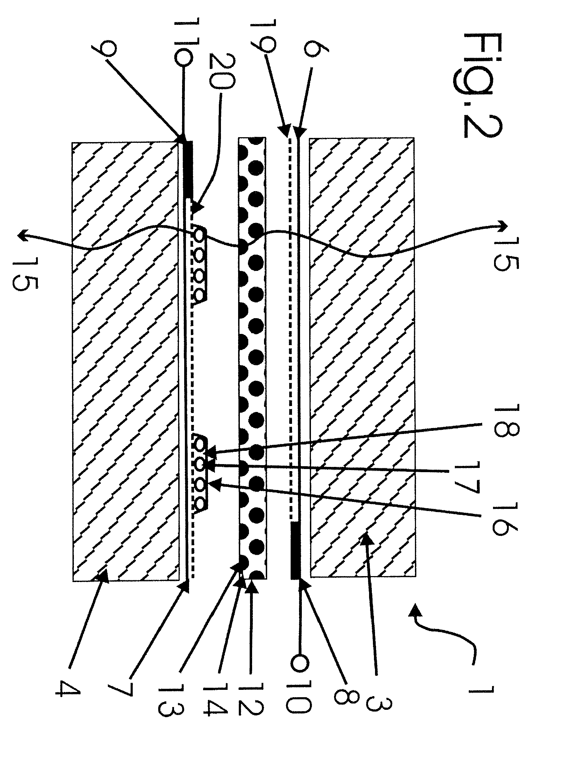

Falls eine ohmsche Leitfähigkeit zustande kommt, kann noch eine zusätzliche Isolation eingebaut werden. Dies wird in Figur 2 durch den Einbau der beiden Isolationsschichten (19, 20) schematisch aufgezeigt, wobei grundsätzlich auch nur eine Isolationsschicht vorliegen kann.

In Figur 2 wird eine schematische Darstellung eines beispielhaften Querschnitts durch ein Verbundglaselement (1) mit symmetrischer Anordnung der zumindest zwei Glaselemente (3, 4) inklusive zwei dünner Isolationsschichten (19, 20) in einem nicht laminierten Zustand gezeigt, In dieser Darstellung werden zwei zusätzliche Isolationsschichten (19,20) auf den Elektrodenschichten (6, 7) vorgesehen. Derartige Isolationsschichten (19, 20) werden oftmals auf elektrisch leitfähigen Glasbeschichtungen (6, 7) zwecks Passivation angebracht und meist im Vakuumverfahren oder chemisch in Form oxidischer oder nitridischer dünner und sehr hoch transparenter Schichten von wenigen 50 bis einigen 100 nm Dicke ausgeführt. Derartige Isolationsschichten (19, 20) bieten auch bei hohen Temperaturen eine gute elektrische Isolation und ermöglichen überdies einen guten Haftverbund mit der EL-Bindematrix (18) beziehungsweise mit der VSG-Verbundmassenmatrix (14) und sind im Allgemeinen zusätzlich chemisch sehr stabil. Allerdings sollten die Isolationsschichten (19, 20) im Allgemeinen im Bereich der Kontaktstreifen (8, 9) entfernt werden. Geeignete Verfahren zur Entfernung sind in der Beschreibung genannt. Grundsätzlich kann die Aufbringung der Isolationsschicht (19, 20) auch mittels üblicher Rollen- oder Vorhanggieß- oder Sprühbeschichtungstechnologien oder mittels Siebdruck erfolgen. Dabei kann eine transparente dünne Glasfrittenbeschichtung gewählt werden, oder es kann eine polymere dünne und transparente Beschichtung durchgeführt werden.

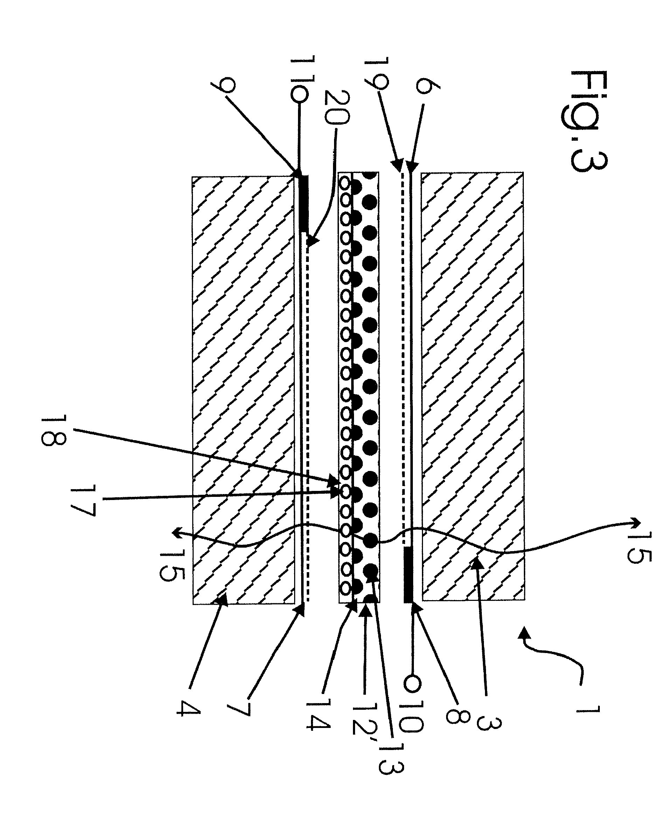

In Figur 3 wird eine schematische Darstellung eines beispielhaften Querschnitts durch ein Verbundglaselement (1) mit symmetrischer Anordnung der zumindest zwei Glaselemente (3, 4) mit einem koextrudierten Verbundfilm (12) in einem nicht laminierten Zustand aufgezeigt, In dieser Ausführung wird die VSG-Verbundmasse (12) in der Form einer koextrudierten PVB-Folie mit flächig integrierten EL-Phosphor-Partikeln (17) dargestellt. Dabei werden EL-Partikel (17) in einer VSG-Verbundmassenmatrix (14) homogen dispergiert auf eine VSG-Verbundmasse (12') extrudiert oder umgekehrt. In die VSG-Verbundmasse (12') sind wie bereits beschrieben funktionale Teilchen (13) zur Erhöhung der relativen Dielektrizitätskonstante eingebaut. Eine derartige Ausführung bewirkt eine vollflächige EL-Emission (15). Diese kann durch zusätzliche grafische Drucke mit lichtundurchlässiger oder transluzenter Eigenschaft zusätzlich gestaltet werden.

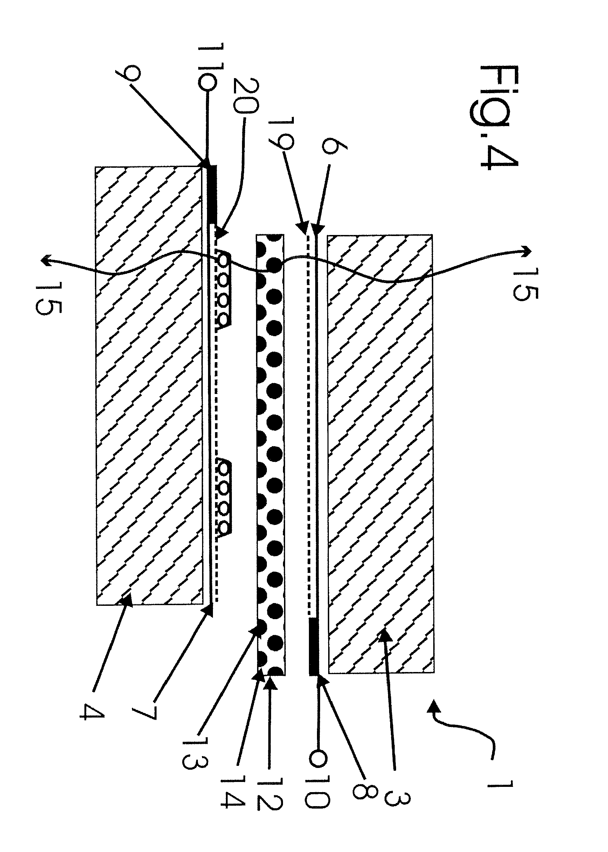

In Figur 4 wird eine schematische Darstellung eines beispielhaften Querschnitts durch ein Verbundglaselement (1) mit asymmetrischer Anordnung der zumindest zwei Glaselemente (3, 4) in einem nicht laminierten Zustand aufgezeigt. Diese Variante soll aufzeigen, dass die Anordnung der Kontaktstreifen (8, 9) auch freiliegend erfolgen kann. Auf diese Weise ist eine Herstellung der Kontaktanschlüsse (10, 11) sehr einfach möglich und kann grundsätzlich auch erst beim Einbau eines kompletten Glaselementes (1) realisiert werden. Der Glasüberstand kann dabei im Allgemeinen einige wenige mm, z.B. 1 mm, bis 10 mm und darüber betragen.

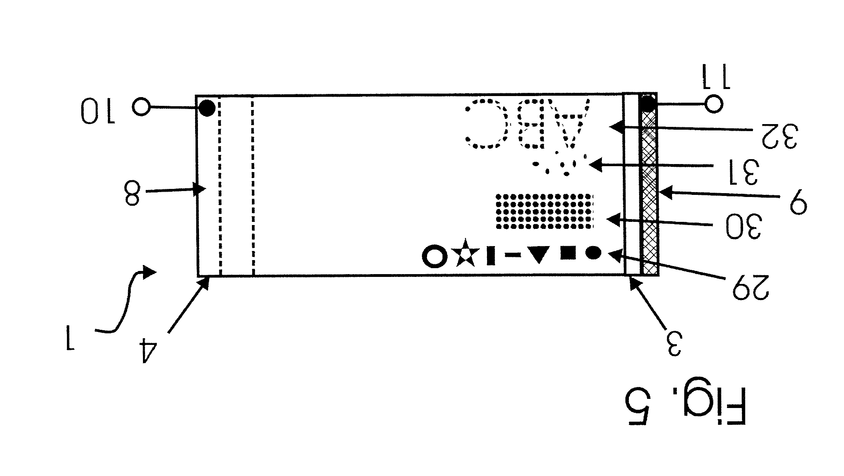

In Figur 5 wird eine schematische Darstellung eines beispielhaften Verbundglaselements (1) mit asymmetrischer seitlich versetzter Anordnung der zumindest zwei Glaselemente (4, 4) in Draufsicht aufgezeigt. Zusätzlich werden in dieser Figur die Möglichkeiten der grafischen Gestaltung einzelner Leuchtelemente (29) z.B. als Punkt, Quadrat, Dreieck, Rechteck beziehungsweise Linie, Stern beziehungsweise Vieleck oder Kreisring aufgezeigt. Derartige Leuchtelemente (29) können regelmäßig (30) oder zufällig beziehungsweise bewusst unregelmäßig (31) oder grafisch gestaltet (32) z.B. in Form von Ziffern oder Logos ausgeführt werden. Die einzelnen Leuchtelemente (29) können mit unterschiedlich emittierenden EL-Partikeln (1 7) oder einer Mischung von EL-Partikeln (1 7) ausgeführt werden. Es könnnen auch die einzelnen EL-Partikel (17) mit farbkonvertierenden Beschichtungen versehen werden und es können farbkonvertierende oder farbfilternde Beimengungen in die einzelnen Bindemittel eingebaut werden.

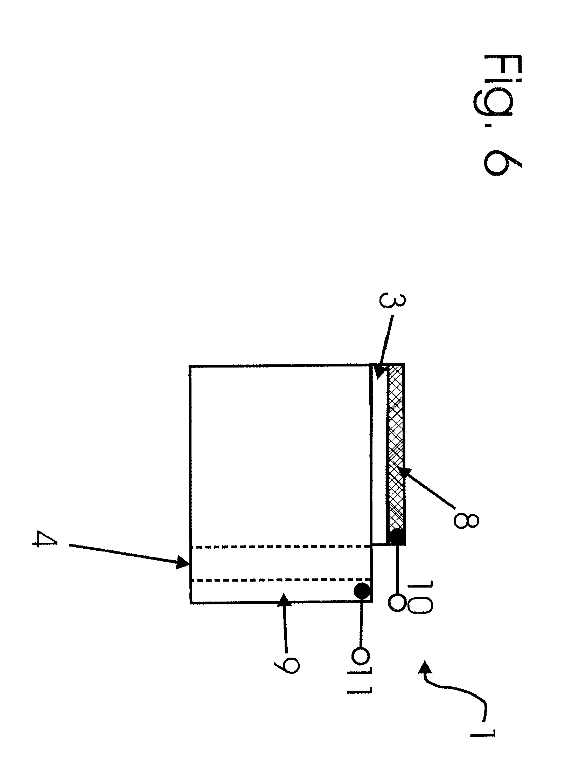

In **Figur 6** wird eine schematische Darstellung eines beispielhaften Verbundglaselements (1) mit asymmetrischer nach rechts und nach oben versetzter Anordnung der zumindest zwei Glaselemente (3, 4) in Draufsicht gezeigt. Diese Anordnung soll nur beispielhaft die Vielzahl der Möglichkeiten der Anordnung der Kontaktstreifen (8, 9) und der Anschlüsse (10, 11) aufzeigen.

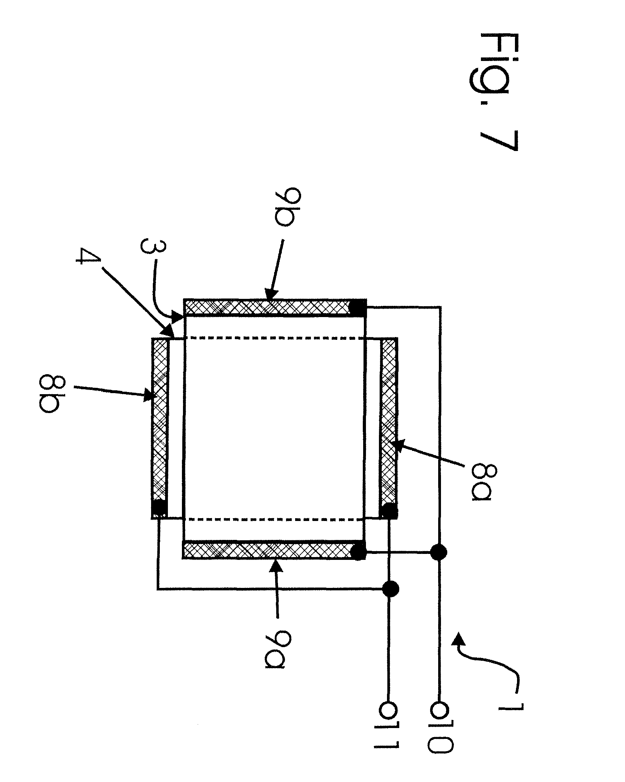

In **Figur 7** wird eine schematische Darstellung eines beispielhaften Verbundglaselements (1) mit symmetrischem Überstand der zumindest zwei Glaselemente (3, 4) in Draufsicht gezeigt. Eine derartige Ausführung ermöglicht eine optimale Kontaktierung der Glaselemente (3, 4) auf den jeweils gegenüberliegenden Kanten.

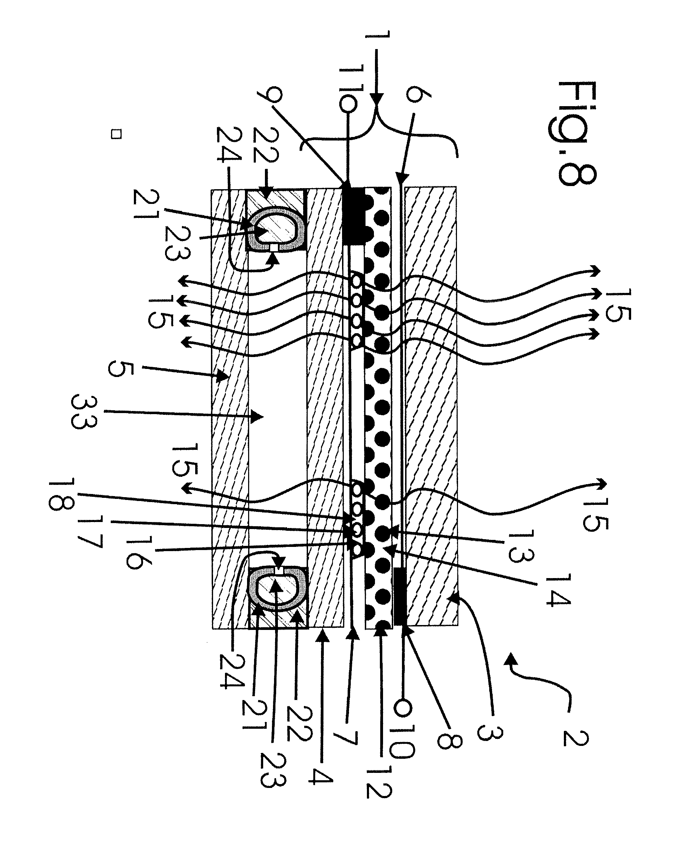

In **Figur 8** wird eine schematische Darstellung eines beispielhaften Querschnitts durch ein Isolierglaselement (2) mit einem Verbundglaselement (1) mit symmetrischer Anordnung der zumindest zwei Glaselemente (3, 4) gezeigt. In diesem Beispiel wird ein möglicher Isolierglasaufbau (2) unter Verwendung eines Verbundglaselements (1) und eines dritten Glaselementes (5) beschrieben.

Der Isolierglasverbund (2) erfolgt nach dem Stand der Technik unter Verwendung eines Abstandhalters (21) aus einem Aluminium- oder Stahlprofil und einer so genannten Sekundärdichtung (22), die den Verbundglaselement (1) beziehungsweise das zweite Glaselement (4) über den Abstandshalter (21) mit dem dritten Glaselement (5) dauerelastisch verbindet. Durch den Randverbund (22, 21) wird ein hermetisch abgeschlossener Zwischenraum (33) hergestellt, welcher üblicherweise durch ein Edelgas befüllt werden kann.

Die Abstandshalterprofile (21) sind üblicherweise mit Trockenmittel (23) befüllt, die über Öffnungen (24) mit dem Zwischenraum (33) verbunden sind und gegebenenfalls eindringenden Wasserdampf binden sollen und so die Lebensdauer des Isolierglasverbundes (2) erhöhen sollen.

Grundsätzlich können die Glaselemente (3, 4, 5) aus einfachem Floatglas oder aus einem eisenoxidarmen Weißglas beziehungsweise aus einem ESG oder VSG oder TVG Element gebildet werden. Sämtliche Glasoberflächen können mit diversen wärmeschützenden, lichtabsorbierenden, lichtreflektierenden und/oder kratzfesten und/oder leicht reinigbaren Schichten beziehungsweise mit Schichten mit einer Zusatzfunktion versehen werden.

Das Isolierglaselement (2) kann auch mit zwei Zwischenräumen (33) und einem vierten Glaselement ausgebildet werden.

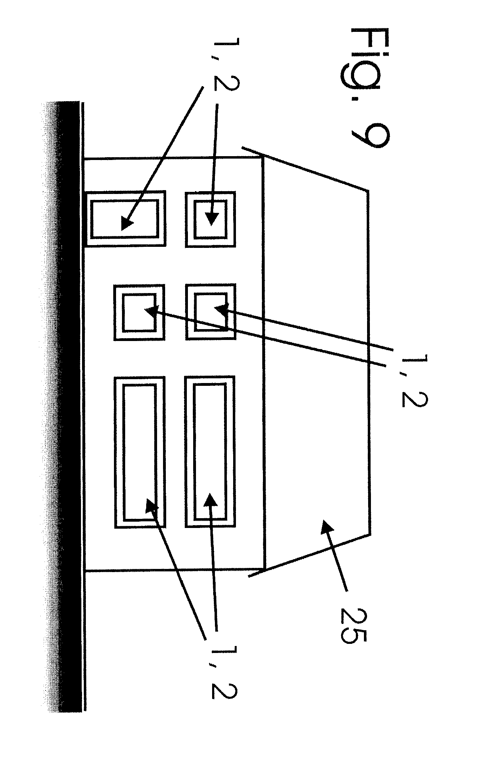

In **Figur 9** wird eine schematische Darstellung eines beispielhaften Gebäudes (25) mit Glaselementen (1, 2) aufgezeigt. Anstelle eines Gebäudes (25) kann auch ein Land-, Luft- oder Wasserfahrzeug oder ein Container Glaselemente (1, 2) aufweisen.

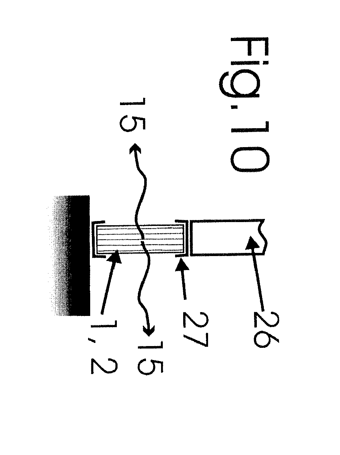

In **Figur 10** wird eine schematische Darstellung eines beispielhaften Wandelements (26) mit einem Rahmen (27) und integriertem Glaselement (1, 2) aufgezeigt. Diese Figur soll nur beispielhaft die Integration eines Glaselements (1, 2) mittels einer Rahmenkonstruktion (27) in einem Gebäude oder Fahrzeug schematisch darstellen. Anstelle eines Rahmens (27) sind auch rahmenlose Einbauvarianten möglich.

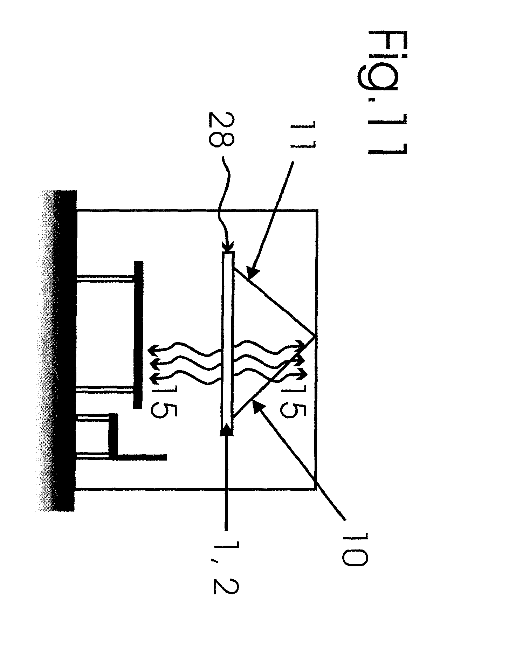

In **Figur 11** wird eine schematische Darstellung einer beispielhaften Leuchte (28) aufgezeigt. In dieser Figur soll die Möglichkeit der Ausbildung einer Leuchte (28) als Raumbeleuchtungskörper beispielhaft aufgezeigt werden. Die elektrischen Anschlüsse (10, 11) sind ebenfalls nur beispielhaft skizziert.

Eine derartige Leuchte (28) kann ebenso als Raumteilerelement oder als Stiegenbegrenzungselement und dergleichen ausgebildet sein,

## Patentansprüche

1. Verbundglaselement, bevorzugt Verbundsicherheitsglaselement, mit integrierter Elektrolumineszenz-Leuchtstruktur, umfassend:
a) ein erstes zumindest teilweise transparentes Substrat mit einer Innenseite und einer Außenseite, das durch Beschichtung auf der Innenseite elektrisch leitfähig ist und eine erste Elektrode A darstellt,
b) einen zumindest teilweise transparenten polymeren Haftvermittler B aus einem Kunststoff, der bevorzugt eine Dielektrizitätskonstante gemessen bei 1 kHz von mindestens 30 aufweist, der auf der Innenseite des ersten zumindest teilweise transparenten Substrats im Anschluss an die Beschichtung angeordnet ist,
c) mindestens eine Elektrolumineszenz-Leuchtstruktur C, die im Anschluss an den polymeren Haftvermittler auf der Innenseite des ersten zumindest teilweise transparenten Substrats angeordnet ist, wobei die mindestens eine Elektroluminezenz-Leuchtstruktur auf der gesamten Fläche des ersten zumindest teilweise transparenten Substrats angeordnet sein kann oder auf einer oder mehreren Teilflächen des ersten zumindest teilweise transparenten Substrats angeordnet sein kann,
d) ein zweites zumindest teilweise transparentes Substrat mit einer Innenseite und einer Außenseite, das im Anschluss an die mindestens eine Elektroluminezenz-Leuchtstruktur angeordnet ist, das durch Beschichtung auf der Innenseite elektrisch leitfähig ist, wobei die Innenseite des zweiten zumindest teilweise transparenten Substrats in Richtung der Innenseite des ersten zumindest teilweise transparenten Substrats angeordnet ist, wobei das zweite zumindest teilweise transparente Substrat eine zweite Elektrode D darstellt.

2. Verbundglaselement nach Anspruch 1 , **dadurch gekennzeichnet, dass** das erste und das zweite zumindest teilweise transparente Substrat Glassubstrate sind, bevorzugt Floatglas, Einscheiben-Sicherheitsglas oder teilvorgespanntes Glas.

3. Verbundglaselement nach Anspruch 1 oder 2, **dadurch gekennzeichnet, dass** die Beschichtung des ersten und des zweiten zumindest teilweise transparenten Substrats ein elektrisch leitfähiger zumindest teilweise transparenter Dünnfilm ist, der bevorzugt durch Sputtertechnik, Aufdampftechnik, mittels Vakuum oder pyrolytisch auf das erste und das zweite zumindest teilweise transparente Substrat aufgebracht wird,

4. Verbundglaselement nach einem der Ansprüche 1 bis 3, **dadurch gekennzeichnet, dass** der zumindest teilweise transparente polymere Haftvermittler B ein Gießharz oder eine thermoplastische Verbundfolie ist, wobei die thermoplastische Verbundfolie bevorzugt ausgewählt ist aus der Gruppe bestehend aus Polyvinylbutyral, Ethylenvinylacetat, Polyacrylat, Polymethylmethacrylat, Polyurethan, Polyvinylalkohol und Polyvinylchlorid, bevorzugt Polyvinylbutyral.

5. Verbundglaselement nach Anspruch 4, **dadurch gekennzeichnet, dass** das Gießharz oder die thermoplastische Verbundfolie eine Verbundmassenmatrix bildet, der weitgehend transparente Elemente in Form von nanoskaligen Teilchen, nanoskaligen Agglomeraten, dendritischen Teilchen, submikron- und mikrometergroßen kristallinen Teilchen und Kombinationen davon beigemengt sind.

6. Verbundglaselement nach Anspruch 5, **dadurch gekennzeichnet, dass** es sich bei den weitgehend transparenten Elementen um Single-Walled-Carbon-Nano-Tubes (SWCNTs) und/oder um metallische Nano-Tubes handelt.

7. Verbundglaselement nach Anspruch 4, **dadurch gekennzeichnet, dass** der zumindest teilweise transparente polymere Haftvermittler eine thermoplastische Verbundfolie ist, die mit einem elektrisch leitfähigen Metallgewebe durchwirkt ist.

8. Verbundglaselement nach einem der Ansprüche 1 bis 7, **dadurch gekennzeichnet, dass** die mindestens eine Elektrolumineszenz-Leuchtstruktur C eine Wechselstrom-Dickfilm-Pulver-Elektrolumineszenz (AC-P-EL)-Leuchtstruktur ist.

9. Verbundglaselement nach einem der Ansprüche 1 bis 7, **dadurch gekennzeichnet, dass** die mindestens eine Elektrolumineszenz-Leuchtstruktur grafisch gestaltet angeordnet ist.

10. Verbundglaselement nach Anspruch 9, **dadurch gekennzeichnet, dass** die grafisch gestaltete Elektrolumineszenz-Leuchtstruktur aus einer Vielzahl von Leuchtelementen gebildet wird, wobei die einzelnen Leuchtelemente aus beliebigen Zeichen, bevorzugt Punkten, Rechtecken, Dreiecken, Vierecken, Linien, Kreisen, Sternen und/oder Buchstaben gebildet werden, die geometrisch exakt oder willkürlich im Anschluss an den zumindest teilweise transparenten polymeren Haftvermittler B angeordnet sind.

11. Verbundglaselement nach Anspruch 10, **dadurch gekennzeichnet, dass** die Leuchtelemente der mindestens einen Elektrolumineszenz-Leuchtstruktur verschiedene Emissionsfarben aufweisen und/oder dass bei Einsatz von mehr als einer Elektrolumineszenz-Leuchtstruktur die Elektrolumineszenz-Leuchtstrukturen unterschiedliche Emissionsfarben aufweisen.

12. Verbundglaselement nach einem der Ansprüche 8 bis 11, **dadurch gekennzeichnet, dass** in der mindestens einen AC-P-EL-Leuchtstruktur Pigmente eingesetzt werden, die nicht mikroverkapselt sind.

13. Isolierglas-Element enthaltend mindestens ein Verbundglaselement nach einem der Ansprüche 1 bis 12.

14. Verfahren zur Herstellung eines Verbundglaselements nach einem der Ansprüche 1 bis 12, wobei die mindestens eine Elektrolumineszenz-Leuchtstruktur C mittels Siebdruck auf der Elektrode A oder D oder auf dem polymeren Haftvermittler B aufgebracht wird.

15. Verfahren zur Herstellung eines Verbundglaselements nach einem der Ansprüche 1 bis 12, wobei zunächst ein Schichtverbund umfassend die Komponenten A, B, C und D sowie gegebenenfalls weitere Komponenten hergestellt wird und dieser Schichtverbund anschließend bei erhöhter Temperatur und erhöhtem Druck zu einer unlösbaren Einheit verbunden wird.

16. Verwendung eines Verbundglaselements nach einem der Ansprüche 1 bis 1 2 oder hergestellt nach Anspruch 14 oder 15 oder eines Isolierglas-Elements nach Anspruch 13 als Dekorelement und/oder Leuchtelement in Innenräumen oder zur Außenanwendung, bevorzugt an Außenfassaden von Gebäuden, in oder an Einrichtungsgegenständen, in oder an Land-, Luft- oder Wasserfahrzeugen oder in der Werbebranche.
